# EUROPÄISCHE PATENTSCHRIFT

(11) **EP 1 174 632 B1**
(45) Veröffentlichungstag und Bekanntmachung des Hinweises auf die Patenterteilung: **28.11.2007**
(21) Anmeldenummer: 01112876.6
(22) Anmeldetag: 01.06.2001
(51) Int. Cl.: F16D 25/10, F16D 25/12, F16D 21/06

(54) **Mehrfach-Kupplungseinrichtung in Kombination mit einer Torsionsschwingungsdämpferanordnung oder/und einer Elektromaschine**
Multiple clutch device combined with a torsional vibration damper arrangement and/or an electrical machine
Installation d'embrayage multiple en combinaison avec un dispositif amortisseur d'oscillations de torsion ou/et une machine électrique

(30) Priorität: 17.07.2000 DE 10034730; 29.03.2001 DE 10115504
(43) Veröffentlichungstag der Anmeldung: 23.01.2002
(73) Patentinhaber: ZF Sachs AG, 97424 Schweinfurt (DE)
(72) Erfinder: Geiger, Martin, Dipl.-Ing. (FH), 97261 Güntersleben (DE); Schierling, Bernhard, Dipl.-Ing. (FH), 97273 Kürnach (DE); Kraus, Paul, Dipl.-Ing., 97464 Niederwerrn (DE)

(56) Entgegenhaltungen:
- EP-A- 0 931 951
- EP-A- 1 052 421
- EP-A- 1 195 537
- WO-A-99/51889
- DE-A1- 10 004 179
- DE-A1- 10 034 730
- DE-A1- 19 821 164
- DE-U1- 9 114 528

## Beschreibung

Die Erfindung betrifft allgemein eine Mehrfach-Kupplungseinrichtung, ggf. Doppel-Kupplungseinrichtung, für die Anordnung in einem Antriebsstrang eines Kraftfahrzeugs zwischen einer Antriebseinheit und einem Getriebe, wobei die Kupplungseinrichtung eine einer ersten Getriebeeingangswelle des Getriebes zugeordnete erste Kupplungsanordnung und eine einer zweiten Getriebeeingangswelle des Getriebes zugeordnete zweite Kupplungsanordnung aufweist zur Momentenübertragung zwischen der Antriebseinheit und dem Getriebe.

Eine derartige Kupplungseinrichtung ist beispielsweise aus der EP 0 931 951 A1 bekannt. Die Kupplungseinrichtung dient zur Verbindung des Antriebs eines Kraftfahrzeugs mit einem mehrstufigen Schaltgetriebe über zwei bevorzugt automatisiert betätigte Reibungskupplungen, wobei jeder dieser beiden Reibungskupplungen jeweils ein Ausrücksystem zugeordnet ist, so dass die beiden Reibungskupplungen unabhängig voneinander ein- oder ausrückbar sind. Eine Kupplungsscheibe einer der beiden Reibungskupplungen ist auf einer zentralen Getriebeeingangswelle drehfest angeordnet, während eine Kupplungsscheibe der anderen Reibungskupplung an einer die zentrale Getriebeeingangswelle umgreifenden, als Hohlwelle ausgebildeten zweiten Getriebeeingangswelle drehfest angreift. Die bekannte Doppelkupplung ist mit einer festen Druckplatte der einen Reibungskupplung an einem Schwungrad einer Brennkraftmaschine angeordnet. Die Anordnung der Doppelkupplung in einem Antriebsstrang entspricht insoweit weitgehend der Anordnung herkömmlicher (Einfach-) Reibungskupplungen im Antriebsstrang.

Ein Doppelkupplungsgetriebe gattungsgemäßer Art ist zum Beispiel aus DE 198 21 164 bekannt. Hierbei ist eine erste Kupplungsanordnung einer ersten Getriebeeingangswelle zugeordnet und eine zweite Kupplungsanordnung einer zweiten Getriebeeingangswelle zugeordnet, wobei die eine Getriebeeingangswelle als Hohlwelle ausgebildet ist und die andere Getriebeeingangswelle umschließt.
Die beiden Kupplungsanordnungen sind radial zueinander angeordnet.

Doppelkupplungseinrichtungen (kurz: Doppelkupplungen) der eingangs genannten Art haben in jüngerer Zeit ein größeres Interesse gefunden und bestehen im Allgemeinen aus zwei nass- oder trockenlaufenden Kupplungen, die wechselseitig - ggf. auch mit Überschneidungen - geschaltet werden. Insbesondere im Zusammenhang mit einem mehrstufigen Schaltgetriebe bieten derartige Kupplungen die Möglichkeit, Schaltvorgänge zwischen jeweils zwei Übersetzungsstufen des Getriebes ohne Zugkraftunterbrechung vorzunehmen.

Doppelkupplungseinrichtungen bieten prinzipiell die Möglichkeit, bei besonders schwierigen, speziell im Rennsport üblichen Anfahrvorgängen beide Kupplungen gemeinsam zu beaufschlagen. Hierzu kann einerseits das Fahrpedal ggf. bis zum Anschlag ausgelenkt werden, während gleichzeitig das Kraftfahrzeug unter Aufwendung der maximalen Bremskraft so lange im Wesentlichen im Stillstand gehalten wird, bis die Kupplung ihren optimalen Übertragungspunkt erreicht hat. Wenn im Augenblick des Erreichens des optimalen Übertragungspunkts die Bremswirkung aufgehoben wird, wird das Fahrzeug mit maximaler Beschleunigung anfahren. Derartige Anfahrvorgänge kommen auch für Kraftfahrzeuge mit relativ schwacher Motorisierung, also nicht nur im Rennsport, unter extremen Anfahrbedingungen in Betracht, beispielsweise zum Anfahren an einem Hindernis.

Aus der DE 44 15 664 A1 ist eine Mehrfach-Kupplungseinrichtung bekannt, bei welcher durch wahlweises Aktivieren einer Lamellen-Kupplungsanordnung von einer Mehrzahl von Lamellen-Kupplungsanordnungen ein Drehmomentübertragungsweg zwischen einem Antriebsorgan und einem von einer Mehrzahl von Abtriebsorganen hergestellt werden kann. Die Abtriebsorgane werden bei derartigen Mehrfach-Kupplungsanordnungen im Allgemeinen durch koaxial ineinander geschachtelte und vergleichsweise lang ausgebildete Wellen, beispielsweise Getriebeeingangswellen, gebildet. Aufgrund ihrer vergleichsweise großen Länge weisen diese Getriebeeingangswellen relativ geringe Torsionssteifigkeiten auf und wirken daher wie in den Antriebsstrang integrierte Drehfedern. Diese zusätzliche Elastizität führt oftmals zu unerwünschten Verschiebungen des Resonanzschwingungsbereichs eines derartigen Antriebsstrangs. Um dem entgegenzuwirken, könnte man in einen derartigen Antriebsstrang vor dem Getriebe, also vor die einzelnen in das Getriebe integrierten Drehmomentübertragungswege, einen Torsionsschwingungsdämpfer bekannter Bauart, beispielsweise in Form eines Mehrmassenschwungrads, integrieren. Ein derartiger Torsionsschwingungsdämpfer beansprucht jedoch zusätzlichen Bauraum und führt zu zusätzlichen Kosten eines derartigen Systems. Ferner kann dadurch das Problem entstehen, dass durch das Integrieren eines derartigen vor das Getriebe geschalteten Torsionsschwingungsdämpfers auch die Lage der Eigenfrequenzen im Bereich der Getriebeeingangswellen verschoben wird. Werden die Eigenfrequenzen zu einem höheren Drehzahlbereich hin verschoben, so kann in diesem Drehzahlbereich ein derartiger vorgeschalteter Torsionsschwingungsdämpfer jedoch oftmals nicht im erforderlichen Ausmaß zur Schwingungsdämpfung beitragen. Zur Vermeidung von Schwingungsanregungen ist es weiter bekannt, die verschiedenen Kupplungsbereiche zumindest in bestimmten Drehzahlbereichen schlupfend zu betreiben. Dies bedeutet jedoch neben dem auftretenden Energieverlust auch eine übermäßige Abnutzung der reibend aneinander anliegenden Oberflächen.

Nach der Erfindung wird ein Antriebssystem nach Anspruch 1 bereitgestellt.

Eine Kombination aus einer Elektromaschine und einer Torsionsschwingungsdämpferanordnung ist beispielsweise aus der DE 199 14 376 A1 bekannt. Bei dem bekannten System ist die Torsionsschwingungsdämpferanordnung derart ausgebildet, dass sie entweder gemeinsam mit der Trägeranordnung für den Rotorwechselwirkungsbereich durch Schraubbolzen oder dergleichen an einer Antriebswelle angeschraubt ist oder dass eine Seite von Primärseite und Sekundärseite mit der Trägeranordnung zur gemeinsamen Drehung verkoppelt ist, bzw. über diese dann mit der Antriebswelle drehfest verbunden ist. Daraus resultiert der Aufbau, der relativ viel Bauraum beansprucht, was jedoch insbesondere bei der Integration derartiger Antriebssysteme in einen Antriebsstrang bei kleinen Kraftfahrzeugen zu Schwierigkeiten führt. Dies gilt umso mehr, wenn das System umfassend die Elektromaschine und die Torsionsschwingungsdämpferanordnung in Kombination mit einer Mehrfach-Kupplungseinrichtung anstelle einer normalen Einfach-Kupplungseinrichtung vorgesehen wird.

In Weiterbildung des genannten Antriebssystems werden nachfolgend verschiedene Ausgestaltungen des Antriebssystems (umfassend die Mehrfach-Kupplungseinrichtung, die Elektromaschine und die Torsionsschwingungsdämpferanordnung) vorgeschlagen, die unter anderem eine vergleichsweise einfache Montage des Antriebssystems im Antriebsstrang, eine Optimierung der Schwingungsbedämpfung von im Drehbetrieb auftretenden Schwingungsanregungen und die Verringerung des beanspruchten Bauraums betreffen.

Für eine einfache Eingliederung des Antriebssystems in einen Antriebsstrang wird speziell vorgeschlagen, dass das Antriebssystem ein einer Antriebseinheit zugeordnetes erstes Teilsystem und ein einem Getriebe zugeordnetes zweites Teilsystem aufweist, wobei zur Eingliederung des Antriebssystems in einen Antriebsstrang zwischen der Antriebseinheit und dem Getriebe das Getriebe mit dem daran angeordneten ersten Teilsystem und die Antriebseinheit mit dem daran angeordnetem zweiten Teilsystem unter Verkopplung der beiden Teilsysteme zusammenfügbar sind. Man wird hierzu in der Regel vorsehen, dass zur Eingliederung des Antriebssystems in einen Antriebsstrang zwischen einer Antriebseinheit und einem Getriebe zuerst das erste Teilsystem an der Antriebseinheit anmontierbar und das zweite Teilsystem am Getriebe anmontierbar sind und dass dann das Getriebe und die Antriebseinheit unter Verkopplung der beiden Teilsysteme zusammenfügbar sind.

Die Verkopplung der beiden Teilsysteme wird dann besonders einfach, wenn das erste Teilsystem ein erstes Koppelglied und das zweite Teilsystem ein zweites Koppelglied aufweist, die jeweils mit einer Mitnahmeformation ausgeführt sind, die durch im wesentlichen axiale Relativbewegung bezogen auf eine den Teilsystemen gemeinsame Achse in gegenseitigen Drehmitnahmeeingriff bringbar sind zur Verkoppelung der beiden Teilsysteme beim Zusammenfügen des Getriebes und der Antriebseinheit. Die Mitnahmeformationen können als Innenverzahnung und Außenverzahnung ausgeführt sein.

Das erste Teilsystem kann die Torsionsschwingungsdämpferanordnung und das zweite Teilsystem kann die Mehrfach-Kupplungseinrichtung aufweisen.

Da eine Elektromaschine als Teil des Antriebssystems vorgesehen ist so ist es in der Regel zweckmäßig, dass das erste Teilsystem die Elektromaschine und das zweite Teilsystem die Mehrfach-Kupptungseinrichtung aufweist. Man könnte aber auch daran denken, dass das erste Teilsystem die Statoranordnung und das zweite Teilsystem die Rotoranordnung und die Mehrfach-Kupplungseinrichtung aufweist. Eine andere Möglichkeit ist, dass das erste Teilsystem die Rotoranordnung und das zweite Teilsystem die Statoranordnung und die Mehrfach-Kupplungseinrichtung aufweist. Da zusätzlich eine Torsionsschwingungsdämpferanordnung vorgesehen ist, so kann das erste Teilsystem diese aufweisen.

Für alle angesprochenen Varianten ist es für eine möglichst einfache Montage bevorzugt, wenn wenigstens eines der Teilsysteme als vormontierte Einheit an der Antriebseinheit bzw. dem Getriebe anmontierbar ist. Höchstvorzugsweise sind beide Teilsysteme als jeweilige vormontierte Einheit an der Antriebseinheit bzw. dem Getriebe anmontierbar.

Generell wird vorgeschlagen, dass der Rotorwechselwirkungsbereich durch eine Trägeranordnung zur gemeinsamen Drehung mit der der Eingangsseite zugeordneten Komponente gekoppelt oder koppelbar ist. Die Mehrfach-Kupplungseinrichtung kann eine einer ersten Getriebeeingangswelle eines Getriebes des Antriebsstrangs zugeordnete erste Kupplungsanordnung und eine einer zweiten Getriebeeingangswelle des Getriebes zugeordnete zweite Kupplungsanordnung aufweisen zur Momentenübertragung zwischen der Antriebseinheit und dem Getriebe. Vorzugsweise ist von den Getriebeeingangswellen wenigstens eine als Hohlwelle ausgebildet und es verläuft eine der Getriebeeingangswellen durch die andere, als Hohlwelle ausgebildete Getriebeeingangswelle. Die Kupplungsanordnungen sind vorzugsweise als (in der Regel nasslaufende) Lamellen-Kupplungsanordnungen ausgebildet. Für eine optimale Ausnutzung des Bauraums ist es zweckmäßig, wenn eine radial äußere Kupplungsanordnung der Lamellen-Kupplungsanordnungen eine radial innere Kupplungsanordnung der Lamellen-Kupplungsanordnungen ringartig umschließt.

Als besonders zweckmäßige Ausgestaltung der Mehrfach-Kupplungseinrichtung wird vorgeschlagen, dass die Mehrfach-Kupplungseinrichtung eine als Eingangsseite dienende oder dieser zugeordnete Kupplungseinrichtungsnabe umfasst, die eine Mitnahmeformation, ggf. Außenverzahnung, zur Ankopplung der Torsionsschwingungsdämpferanordnung oder zur Ankoppelung eines Abtriebselements der Antriebseinheit oder/und eines Koppelelements der Elektromaschine aufweist oder/und die eine Mitnahmeformation, ggf. Innenverzahnung, zur Ankoppelung einer getriebeseitig angeordneten Betriebsfluidpumpe, ggf. Ölpumpe, über eine Pumpenantriebswelle aufweist.

Vor allem im Hinblick auf eine Verringerung des vom Antriebssystem beanspruchten Bauraums wird vorgeschlagen, dass das Antriebssystem wenigstens ein Bauteil aufweist, welches funktionsmäßig oder/und strukturell oder/und zumindest bereichsweise räumlich in wenigstens zwei von der Mehrfach-Kupplungseinrichtung, der Torsionsschwingungsdämpferanordnung und der Elektromaschine integriert ist.

Die Erfindung betrifft ferner einen Antriebsstrang für ein Kraftfahrzeug, umfassend eine gewünschtenfalls als Brennkraftmaschine ausgeführte Antriebseinheit, ein Getriebe und ein zwischen der Antriebseinheit und dem Getriebe angeordnetes Antriebssystem nach der Erfindung.

Die Erfindung wird im Folgenden anhand von in den Figuren gezeigten Ausführungsbeispielen näher erläutert.
- Fig. 1: zeigt in einer teilgeschnittenen Darstellung eine in einem An Antriebseinheit angeordnete Doppelkupplung mit zwei Lamellen-Kupplungsanordnungen.
- Fig. 2: zeigt in einer der Fig. 1 entsprechenden Darstellungen eine Variante der Doppelkupplung der Fig. 1 in Kombination mit einem Torsionsschwingungsdämpfer.
- Fig. 3: zeigt eine nicht patentgemäße Ausführungsform einer Doppelkupp lung mit einem in die Kupplung integrierten Torsions schwingungsdämpfer.
- Fig. 4-7,10, 11: zeigen nicht patentgemäße Antriebssysteme umfassend eine Doppelkupplung in Kombination mit einem Torsionsschwingungsdämpfer und gegebenenfalls einer Elektromaschine, beispielsweise ein sogenannter Kurbelwellenstartergenerator.
- Fig. 8,9: zeigen patentgemäße Antriebssysteme umfassend eine Doppelkupplung in Kombination mit einem Torsionsschwingungsdämpfer und gegebenenfalls einer Elektromaschine, beispielsweise ein sogenannter Kurbelwellenstartergenerator.

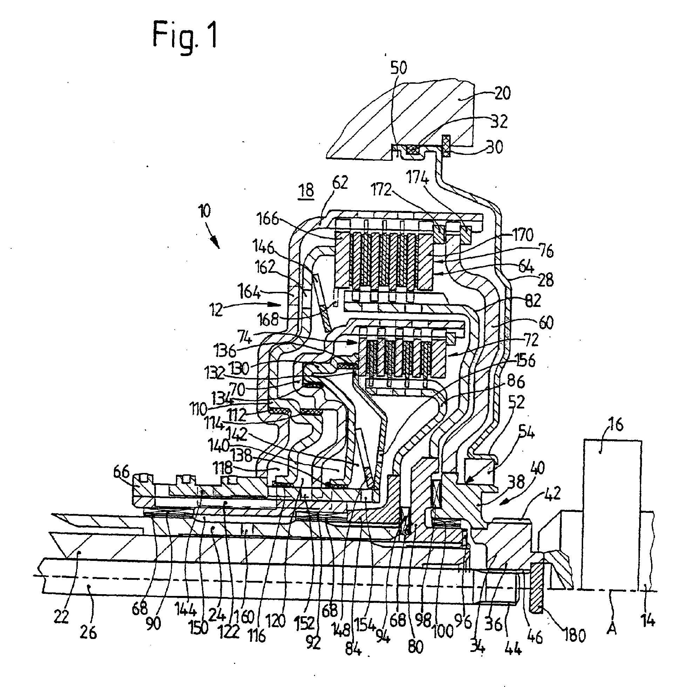

Fig. 1 zeigt eine in einem Antriebsstrang 10 zwischen einer Antriebseinheit und einem Getriebe angeordnete Doppelkupplung 12. Von der Antriebseinheit, beispielsweise eine Brennkraftmaschine, ist in Fig. 1 nur eine Abtriebswelle 14, ggf. Kurbelwelle 14, mit einem zur Ankopplung eines nicht dargestellten Torsionsschwingungsdämpfers dienenden Koppelende 16 dargestellt. Das Getriebe ist in Fig. 1 durch einen eine Getriebegehäuseglocke 18 begrenzenden Getriebegehäuseabschnitt 20 und zwei Getriebeeingangswellen 22 und 24 repräsentiert, die beide als Hohlwellen ausgebildet sind, wobei die Getriebeeingangswelle 22 sich im Wesentlichen koaxial zur Getriebeeingangswelle 24 durch diese hindurch erstreckt. Im Inneren der Getriebeeingangswelle 22 ist eine Pumpenantriebswelle angeordnet, die zum Antrieb einer getriebeseitigen, in Fig. 1 nicht dargestellten Ölpumpe dient, wie noch näher erläutert wird.

Die Doppelkupplung 12 ist in die Getriebegehäuseglocke 18 aufgenommen, wobei der Glockeninnenraum in Richtung zur Antriebseinheit durch einen Deckel 28 verschlossen ist, der in eine Glockengehäuseöffnung eingepresst ist oder/und darin durch einen Sprengring 30 gesichert ist. Weist die Doppelkupplung, wie das in Fig. 1 gezeigte Beispiel, nasslaufende Reibungskupplungen, beispielsweise Membrankupplungen, auf, so ist es in der Regel angebracht, für einen Dichteingriff zwischen dem Deckel 28 und dem von der Getriebegehäuseglocke 18 gebildeten Kupplungsgehäuse zu sorgen, der beispielsweise mittels eines O-Rings oder eines sonstigen Dichtrings hergestellt sein kann. In Fig. 1 ist ein Dichtring 32 mit zwei Dichtlippen gezeigt.

Als Eingangsseite der Doppelkupplung 12 dient eine Kupplungsnabe 34, die aus noch näher zu erläuternden Gründen aus zwei aneinander festgelegten Ringabschnitten 36, 38 besteht. Die Kupplungsnabe 34 erstreckt sich durch eine zentrale Öffnung des Deckels 28 in Richtung zur Antriebseinheit und ist über eine Außenverzahnung 42 mit dem nicht dargestellten Torsionsschwingungsdämpfer gekoppelt, so dass über diesen eine Momentenübertragungsverbindung zwischen dem Koppelende 16 der Kurbelwelle 14 und der Kupplungsnabe 34 besteht. Möchte man auf einen Torsionsschwingungsdämpfer generell oder an dieser Stelle im Antriebsstrang verzichten, so kann die Kopplungsnabe 34 auch unmittelbar mit dem Koppelende 16 gekoppelt werden. Die Pumpenantriebswelle 26 weist an ihrem vom Getriebe fernen Ende eine Außenverzahnung 44 auf, die in eine Innenverzahnung 46 des Ringabschnitts 36 der Kupplungsnabe 34 eingreift, so dass sich die Pumpenantriebswelle 26 mit der Kupplungsnabe 34 mitdreht und dementsprechend die Ölpumpe antreibt, wenn der Kupplungsnabe 34 eine Drehbewegung erteilt wird, im Regelfall von der Antriebseinheit und in manchen Betriebssituationen eventuell auch vom Getriebe her über die Doppelkupplung (beispielsweise in einer durch das Stichwort "Motorbremse" charakterisierten Betriebssituation).

Der Deckel 28 erstreckt sich radial zwischen einem eine Radialausnehmung 50 der Gehäuseglocke 18 begrenzenden ringförmigen Umfangswandabschnitt der Gehäuseglocke 18 und dem Ringabschnitt 38 der Nabe 34, wobei es vorteilhaft ist, wenn zwischen einem radial inneren Wandbereich 52 des Deckels 28 und der Nabe 34, speziell dem Ringabschnitt 38, eine Dichtungs- oder/und Drehlageranordnung 54 vorgesehen ist, speziell dann, wenn - wie beim gezeigten Ausführungsbeispiel - der Deckel 28 an der Gehäuseglocke 18 festgelegt ist und sich dementsprechend mit der Doppelkupplung 12 nicht mitdreht. Eine Abdichtung zwischen dem Deckel und der Nabe wird insbesondere dann erforderlich sein, wenn es sich, wie beim Ausführungsbeispiel, bei den Kupplungsanordnungen der Doppelkupplung um nasslaufende Kupplungen handelt. Eine hohe Betriebssicherheit auch im Falle von auftretenden Schwingungen und Vibrationen wird erreicht, wenn die Dichtungs- oder/und Drehlageranordnung 54 axial am Deckel 28 oder/und an der Kupplungsnabe 34 gesichert ist, etwa durch einen nach radial innen umgebogenen Endabschnitt des Deckelrands 52, wie in Fig. 1 zu erkennen ist.

An dem Ringabschnitt 38 der Nabe 34 ist ein Trägerblech 60 drehfest angebracht, das zur Drehmomentübertragung zwischen der Nabe 34 und einem Außenlamellenträger 62 einer ersten Lamellen-Kupplungsanordnung 64 dient. Der Außenlamellenträger 62 erstreckt sich in Richtung zum Getriebe und nach radial innen zu einem Ringteil 66, an dem der Außenlamellenträger drehfest angebracht ist und das mittels einer Axial- und Radial-Lageranordnung 68 an den beiden Getriebeeingangswellen 22 und 24 derart gelagert ist, dass sowohl radiale als auch axiale Kräfte an den Getriebeeingangswellen abgestützt werden. Die Axial- und Radial-Lageranordnung 68 ermöglicht eine Relativverdrehung zwischen dem Ringteil 66 einerseits und sowohl der Getriebeeingangswelle 22 als auch der Getriebeeingangswelle 24 andererseits. Auf den Aufbau und die Funktionsweise der Axial- und Radial-Lageranordnung wird später noch näher eingegangen.

Am Ringteil 66 ist axial weiter in Richtung zur Antriebseinheit ein Außenlamellenträger 70 einer zweiten Lamellen-Kupplungsanordnung 72 drehfest angebracht, deren Lamellenpaket 74 vom Lamellenpaket 76 der ersten Lamellen-Kupplungsanorndung ringartig umgeben wird. Die beiden Außenlamellenträger 62 und 70 sind, wie schon angedeutet, durch das Ringteil 66 drehfest miteinander verbunden und stehen gemeinsam über das mittels einer Außenverzahnung mit dem Außenlamellenträger 62 in formschlüssigem Drehmomentübertragungseingriff stehende Trägerblech 60 mit der Kupplungsnabe 34 und damit - über den nicht dargestellten Torsionsschwingungsdämpfer - mit der Kurbelwelle 14 der Antriebseinheit in Momentenübertragungsverbindung. Bezogen auf den normalen Momentenfluss von der Antriebseinheit zum Getriebe dienen die Außenlamellenträger 62 und 70 jeweils als Eingangsseite der Lamellen-Kupplungsanordnung 64 bzw. 72.

Auf der Getriebeeingangswelle 22 ist mittels einer Keilnutenverzahnung o. dgl. ein Nabenteil 80 eines Innenlamellenträgers 82 der ersten Lamellen-Kupplungsanordnung 64 drehfest angeordnet. In entsprechender Weise ist auf der radial äußeren Getriebeeingangswelle 24 mittels einer Keilnutenverzahnung o. dgl. ein Nabenteil 84 eines Innenlamellenträger 86 der zweiten Lamellen-Kupplungsanordnung 72 drehfest angeordnet. Bezogen auf den Regel-Momentenffuss von der Antriebseinheit in Richtung zum Getriebe dienen die Innenlamellenträger 82 und 86 als Ausgangsseite der ersten bzw. zweiten Lamellen-Kupplungsanordnung 64 bzw. 72.

Es wird noch einmal auf die radiale und axiale Lagerung des Ringteils 66 an den Getriebeeingangswellen 22 und 24 Bezug genommen. Zur radialen Lagerung des Ringteils 66 dienen zwei Radial-Lagerbaugruppen 90 und 92, die zwischen der radial äußeren Getriebeeingangswelle 24 und dem Ringteil 66 wirksam sind. Die axiale Lagerung des Ringsteils 66 erfolgt betreffend einer Abstützung in Richtung zur Antriebseinheit über das Nabenteil 84, ein Axiallager 94, das Nabenteil 80 und einen das Nabenteil 80 an der radial inneren Getriebeeingangswelle 22 axial sichernden Sprengring 96. Das Ringteil 38 der Kupplungsnabe 34 ist wiederum über ein Axiallager 68 und ein Radiallager 100 an dem Nabenteil 80 gelagert. In Richtung zum Getriebe ist das Nabenteil 80 über das Axiallager 94 an einem Endabschnitt der radial äußeren Getriebeeingangswelle 24 axial abgestützt. Das Nabenteil 84 kann unmittelbar an einem Ringanschlag o. dgl. oder einem gesonderten Sprengring o. dgl. in Richtung zum Getriebe an der Getriebeeingangswelle 24 abgestützt sein. Da das Nabenteil 84 und das Ringteil 66 gegeneinander relativ-verdrehbar sind, kann zwischen diesen Komponenten ein Axiallager vorgesehen sein, sofern nicht das Lager 92 sowohl Axiallagerals auch Radiallagerfunktion hat. Vom Letzteren wird in Bezug auf das Beispiel in Fig. 1 ausgegangen.

Große Vorteile ergeben sich daraus, wenn, wie beim gezeigten Ausführungsbeispiel, die sich in radialer Richtung erstreckenden Abschnitte der Außenlamellenträger 62 und 70 auf einer axialen Seite einer zu einer Achse A der Doppelkupplung 12 erstreckenden Radialebene angeordnet sind und die sich in radialer Richtung erstreckenden Abschnitte der Innenlamellenträger 82 und 86 der beiden Lamellen-Kupplungsanordnungen auf der anderen axialen Seite dieser Radialebene angeordnet sind. Hierdurch wird ein besonders kompakter Aufbau möglich, insbesondere dann, wenn - wie beim gezeigten Ausführungsbeispiel - Lamellenträger einer Sorte (Außenlamellenträger oder Innenlamellenträger, beim Ausführungsbeispiel die Außenlamellenträger) drehfest miteinander verbunden sind und jeweils als Eingangsseite der betreffenden Lamellen-Kupplungsanordnung in Bezug auf den Kraftfluss von der Antriebseinheit zum Getriebe dienen.

In die Doppelkupplung 12 sind Betätigungskolben zur Betätigung der Lamellen-Kupplungsanordnungen integriert, im Falle des gezeigten Ausführungsbeispiels zur Betätigung der Lamellen-Kupplungsanordnungen im Sinne eines Einrückens. Ein der ersten Lamellen-Kupplungsanordnung 64 zugeordneter Betätigungskolben 110 ist axial zwischen dem sich radial erstreckenden Abschnitt des Außenlamellenträgers 62 der ersten Lamellen-Kupplungsanordnung 64 und dem sich radial erstreckenden Abschnitt des Außenlamellenträgers 70 der zweiten Lamellen-Kupplungsanordnung 72 angeordnet und an beiden Außenlamellenträgern sowie am Ringteil 66 mittels Dichtungen 112, 114, 116 axial verschiebbar und eine zwischen dem Außenlamellenträger 62 und dem Betätigungskolben 110 ausgebildete Druckkammer 118 sowie eine zwischen dem Betätigungskolben 110 und dem Außenlamellenträger 70 ausgebildete Fliehkraft-Druckausgleichskammer 120 abdichtend geführt. Die Druckkammer 118 steht über einen in dem Ringteil 66 ausgebildeten Druckmediumkanal 122 mit einer an einer Druckmediumsversorgung, hier die bereits erwähnte Ölpumpe, angeschlossenen Drucksteuereinrichtung, ggf. ein Steuerventil, in Verbindung, wobei der Druckmediumskanal 122 über eine das Ringteil 66 aufnehmende, ggf. getriebefeste Anschlusshülse an der Drucksteuereinrichtung angeschlossen ist. Zum Ringteil 66 ist in diesem Zusammenhang zu erwähnen, dass dieses für eine einfachere Herstellbarkeit insbesondere hinsichtlich des Druckmediumkanals 122 sowie eines weiteren Druckmediumkanals zweiteilig hergestellt ist mit zwei ineinander gesteckten hülsenartigen Ringteilabschnitten, wie in Fig. 1 angedeutet ist.

Ein der zweiten Lamellen-Kupplungsanordnung 72 zugeordneter Betätigungskolben 130 ist axial zwischen dem Außenlamellenträger 70 der zweiten Lamellen-Kupplungsanordnung 72 und einem sich im Wesentlichen radial erstreckenden und an einem vom Getriebe fernen axialen Endbereich des Ringteils 66 drehfest und fluiddicht angebrachten Wandungsteil 132 angeordnet und mittels Dichtungen 134, 136 und 138 am Außenlamellenträger 70, dem Wandungsteil 132 und dem Ringteil 66 axial verschiebbar und eine zwischen dem Außenlamellenträger 70 und dem Betätigungskolben 130 ausgebildete Druckkammer 140 sowie eine zwischen dem Betätigungskolben 130 und dem Wandungsteil 132 ausgebildete Fliehkraft-Druckausgleichskammer 142 abdichtend geführt. Die Druckkammer 140 ist über einen weiteren (schon erwähnten) Druckmediumskanal 144 in entsprechender Weise wie die Druckkammer 118 an einer/der Drucksteuereinrichtung angeschlossen. Mittels der Drucksteuereinrichtung(en) kann an den beiden Druckkammern 118 und 140 wahlweise (ggf. auch gleichzeitig) von der Druckmediumsquelle (hier Ölpumpe) aufgebrachter Druck angelegt werden, um die erste Lamellen-Kupplungsanordnung 64 oder/und die zweite Lamellen-Kupplungsanordnung 72 im Sinne eines Einrückens zu betätigen. Zum Rückstellen, also zum Ausrücken der Kupplungen dienen Membranfedern 146, 148, von denen die dem Betätigungskolben 130 zugeordnete Membranfeder 148 in der Fliehkraft-Druckausgleichskammer 142 aufgenommen ist.

Die Druckkammern 118 und 140 sind, jedenfalls während normalen Betriebszuständen der Doppelkupplung 112, vollständig mit Druckmedium (hier Hydrauliköl) gefüllt, und der Betätigungszustand der Lamellen-Kupplungsanordnungen hängt an sich vom an den Druckkammern angelegten Druckmediumsdruck ab. Da sich aber die Außenlamellenträger 62 und 70 samt dem Ringteil 66 und dem Betätigungskolben 110 und 130 sowie dem Wandungsteil 133 im Fahrbetrieb mit der Kupplungswelle 14 mitdrehen, kommt es auch ohne Druckanlegung an den Druckkammern 1-18 und 140 von seiten der Drucksteuereinrichtung zu fliehkraftbedingten Druckerhöhungen in den Druckkammern, die zumindest bei größeren Drehzahlen zu einem ungewollten Einrücken oder zumindest Schleifen der Lamellen-Kupplungsanordnungen führen könnten. Aus diesem Grunde sind die schon erwähnten Fliehkraft-Druckausgleichskammern 120, 142 vorgesehen, die ein Druckausgleichsmedium aufnehmen und in denen es in entsprechender Weise zu fliehkraftbedingten Druckerhöhungen kommt, die die in den Druckkammern auftretenden fliehkraftbedingten Druckerhöhungen kompensieren.

Man könnte daran denken, die Fliehkraft-Druckausgleichskammern 120 und 142 permanent mit Druckausgleichsmedium, beispielsweise Öl, zu füllen, wobei man ggf. einen Volumenausgleich zur Aufnahme von im Zuge einer Betätigung der Betätigungskolben verdrängtem Druckausgleichsmedium vorsehen könnte. Bei der in Fig. 1 gezeigten Ausführungsform werden die Fliehkraft-Druckausgleichskammern 120, 142 jeweils erst im Betrieb des Antriebsstrangs mit Druckausgleichsmedium gefüllt, und zwar in Verbindung mit der Zufuhr von Kühlfluid, beim gezeigten Ausführungsbeispiel speziell Kühlöl, zu den Lamellen-Kupplungsanordnungen 64 und 72 über einen zwischen dem Ringteil 66 und der äußeren Getriebeeingangswelle 24 ausgebildeten Ringkanal 150, dem die für das Kühlöl durchlässigen Lager 90, 92 zuzurechnen sind. Das Kühlöl fließt von einem getriebeseitigen Anschluss zwischen dem Ringteil und der Getriebeeingangswelle 24 in Richtung zur Antriebseinheit durch das Lager 90 und das Lager 92 hindurch und strömt dann in einem Teilstrom zwischen dem vom Getriebe fernen Endabschnitt des Ringteils 66 und dem Nabenteil 84 nach radial außen in Richtung zum Lamellenpaket 74 der zweiten Lamellen-Kupplungsanordnung 72, tritt aufgrund von Durchlassöffnungen im Innenlamellenträger 86 in den Bereich der Lamellen ein, strömt zwischen den Lamellen des Lamellenpakets 74 bzw. durch Reibbelagnuten o. dgl. dieser Lamellen nach radial außen, tritt durch Durchlassöffnungen im Außenlamellenträger 70 und Durchlassöffnungen im Innenlamellenträger 82 in den Bereich des Lamellenpakets 76 der ersten Lamellen-Kupplungsanordnung 64 ein, strömt zwischen den Lamellen dieses Lamellenpakets bzw. durch Belagnuten o. dgl. dieser Lamellen nach radial außen und fließt dann schließlich durch Durchlassöffnungen im Außenlamellenträger 62 nach radial außen ab. An der Kühlölzufuhrströmung zwischen dem Ringteil 66 und der Getriebeeingangswelle 24 sind auch die Fliehkraft-Druckausgleichskammern 120, 142 angeschlossen, und zwar mittels Radialbohrungen 152, 154 im Ringteil 66. Da bei stehender Antriebseinheit das als Druckausgleichsmedium dienende Kühlöl in den Druckausgleichskammern 120, 142 mangels Fliehkräften aus den Druckausgleichskammern abläuft, werden die Druckausgleichskammern jeweils wieder neu während des Betriebs des Antriebsstrangs (des Kraftfahrzeugs) gefüllt.

Da eine der Druckkammer 140 zugeordnete Druckbeaufschlagungsfläche des Betätigungskolbens 130 kleiner ist und sich überdies weniger weit nach radial außen erstreckt als eine der Druckausgleichskammer 142 zugeordnete Druckbeaufschlagungsfläche des Kolbens 130, ist in dem Wandungsteil 132 wenigstens eine Füllstandsbegrenzungsöffnung 156 ausgebildet, die einen maximalen, die erforderliche Fliehkraftkompensation ergebenden Radialfüllstand der Druckausgleichskammer 142 einstellt. Ist der maximale Füllstand erreicht, so fließt das über die Bohrung 154 zugeführte Kühlöl durch die Füllstandsbegrenzungsöffnung 156 ab und vereinigt sich mit dem zwischen dem Ringteil 66 und dem Nabenteil 84 nach radial außen tretenden Kühlölstrom. Im Falle des Kolbens 110 sind die der Druckkammer 118 und die der Druckausgleichskammer 120 zugeordneten Druckbeaufschlagungsflächen des Kolbens gleich groß und erstrecken sich im gleichen Radialbereich, so dass für die Druckausgleichskammer 120 entsprechende Füllstandsbegrenzungsmittel nicht erforderlich sind.

Der Vollständigkeit halber soll noch erwähnt werden, dass im Betrieb vorzugsweise noch weitere Kühlölströmungen auftreten. So ist in der Getriebeeingangswelle 24 wenigstens eine Radialbohrung 160 vorgesehen, über die sowie über einen Ringkanal zwischen den beiden Getriebeeingangswellen ein weiterer Kühlölteilstrom fließt, der sich in zwei Teilströme aufspaltet, von denen einer zwischen den beiden Nabenteilen 80 und 84 (durch das Axiallager 94) nach radial außen fließt und der andere Teilstrom zwischen dem getriebefernen Endbereich der Getriebeeingangswelle 22 und dem Nabenteil 80 sowie zwischen diesem Nabenteil 84 und dem Ringabschnitt 38 der Kupplungsnabe 34 (durch die Lager 98 und 100) nach radial außen strömt.

Da sich das nach radial außen strömende Kühlöl benachbart einem radial äußeren Abschnitt des der ersten Lamellen-Kupplungsanordnung 64 zugeordneten Betätigungskolbens 110 ansammeln könnte und zumindest bei größeren Drehzahlen fliehkraftbedingt die Einrückbewegung dieses Kolbens behindern könnte, weist der Kolben 110 wenigstens eine Druckausgleichsöffnung 162 auf, die einen Kühlölfluss von einer Seite des Kolbens zur anderen ermöglicht. Es wird dementsprechend zu einer Ansammlung von Kühlöl auf beiden Seiten des Kolbens kommen mit entsprechender Kompensation fliehkraftbedingt auf den Kolben ausgeübter Druckkräfte. Ferner wird verhindert, dass andere auf einer Wechselwirkung des Kühlöls mit dem Kolben beruhende Kräfte die erforderlichen axialen Kolbenbewegungen behindern. Es wird hier beispielsweise an hydrodynamische Kräfte o. dgl. gedacht sowie an ein "Festsaugen" des Kolbens am Außenlamellenträger 62.

Es ist auch möglich, wenigstens eine Kühlölabflussöffnung im sich radial erstreckenden, radial äußeren Bereich des Außenlamellenträgers 62 der ersten Lamellen-Kupplungsanordnung 64 vorzusehen. Eine derartige Kühlölabflussöffnung ist bei 164 gestrichelt angedeutet. Um trotzdem eine hinreichende Durchströmung des Lamellenpakets 76 der ersten Lamellen-Kupplungsanordnung 64 mit Kühlfluid (Kühlöl) zu gewährleisten, kann ein Kühlölleitelement (allgemein ein Kühlfluidleitelement) vorgesehen sein. In Fig. 1 ist gestrichelt angedeutet, dass eine benachbarte Endlamelle 166 des Lamellenpakets 76 einen Kühlölleitabschnitt 168 aufweisen könnte, so dass die Endlamelle 166 selbst als Kühlölleitelement dient.

Im Hinblick auf eine einfache Ausbildung der Drucksteuereinrichtung für die Betätigung der beiden Lamellen-Kupplungsanordnungen wurde bei dem Ausführungsbeispiel der Fig. 1 vorgesehen, dass eine für die radial innere Lamellen-Kupplungsanordnung 72 bezogen auf einen Betätigungsdruck an sich gegebene, im Vergleich zur anderen Kupplungsanordnung 64 geringere Momentenübertragungsfähigkeit (aufgrund eines geringeren effektiven Reibradius als die radial äußere Kupplungsanordnung 64) zumindest teilweise kompensiert wird. Hierzu ist die der Druckkammer 140 zugeordnete Druckbeaufschlagungsfläche des Kolbens 130 größer als die der Druckkammer 118 zugeordnete Druckbeaufschlagungsfläche des Kolbens 110, so dass bei gleichem Hydrauliköldruck in den Druckkammern auf den Kolben 130 größere axial gerichtete Kräfte als auf den Kolben 110 ausgeübt werden.

Es sollte noch erwähnt werden, dass durch eine radiale Staffelung der den Kolben zugeordneten Dichtungen, speziell auch eine axiale Überlappung von wenigstens einigen der Dichtungen, eine gute Ausnutzung des zur Verfügung stehenden Bauraums ermöglicht.

Bei den Lamellenpaketen 74, 76 können Maßnahmen zur Vermeidung der Gefahr einer Überhitzung getroffen sein zusätzlich zu der schon beschriebenen Zufuhr von Kühlöl und der Ausbildung von (in der Fig. 1 nur schematisch angedeuteten) Kühlöldurchtrittsöffnungen in den Lamellenträgern. So ist es vorteilhaft, wenigstens einige der Lamellen als "Wärmezwischenspeicher" zu nutzen, die etwa während eines Schlupfbetriebs entstehende, die Wärmeabfuhrmöglichkeiten mittels des Kühlfluids (hier Kühlöls) oder durch Wärmeleitung über die Lamellenträger momentan überfordernde Wärme zwischenspeichern, um die Wärme zu einem späteren Zeitpunkt, etwa in einem ausgekuppelten Zustand der betreffenden Lamellen-Kupplungsanordnung, abführen zu können. Hierzu sind bei der radial inneren (zweiten) Lamellen-Kupplungsanordnung reibbelaglose, also keinen Reibbelag tragende Lamellen axial dicker als Lamellentragelemente von Reibbelag-tragenden Lamellen ausgebildet, um für die reibbelaglosen Lamellen jeweils ein vergleichsweise großes Materialvolumen mit entsprechender Wärmekapazität vorzusehen. Diese Lamellen sollten aus einem Material hergestellt werden, das eine nennenswerte Wärmespeicherfähigkeit (Wärmekapazität) hat, beispielsweise aus Stahl. Die Reibbelag-tragenden Lamellen können im Falle einer Verwendung von üblichen Reibbelägen, beispielsweise aus Papier, nur wenig Wärme zwischenspeichern, da Papier eine schlechte Wärmeleitfähigkeit hat.

Die Wärmekapazität der die Reibbeläge tragenden Reibbelagtragelemente können ebenfalls als Wärmespeicher verfügbar gemacht werden, wenn man anstelle von Belagmaterialien mit geringer Leitfähigkeit Belagmaterialien mit hoher Leitfähigkeit verwendet. In Betracht kommt die Verwendung von Reibbelägen aus Sintermaterial, das eine vergleichsweise hohe Wärmeleitfähigkeit hat. Problematisch an der Verwendung von Sinterbelägen ist allerdings, dass Sinterbeläge einen degressiven Verlauf des Reibwerts µ über einer Schlupfdrehzahl (Relativdrehzahl ΔN zwischen den reibenden Oberflächen) aufweisen, also dass d*µ*/dΔN < 0 gilt. Ein degressiver Verlauf des Reibwerts ist insoweit nachteilig, als dieser eine Selbsterregung von Schwingungen im Antriebsstrang fördern kann bzw. derartige Schwingungen zumindest nicht dämpfen kann. Es ist deshalb vorteilhaft, wenn in einem Lamellenpaket sowohl Lamellen mit Reibbelägen aus Sintermaterial als auch Lamellen mit Reibbelägen aus einem anderen Material mit progressivem Reibwertverlauf über der Schlupfdrehzahl (d*µ*/dΔN > 0) vorgesehen sind, so dass sich für das Lamellenpaket insgesamt ein progressiver Reibwertverlauf über der Schlupfdrehzahl oder zumindest näherungsweise ein neutraler Reibwertverlauf über der Schlupfdrehzahl (dµ/dΔN = 0) ergibt und dementsprechend eine Selbsterregung von Schwingungen im Antriebsstrang zumindest nicht gefördert wird oder- vorzugsweise - Drehschwingungen im Antriebsstrang sogar (aufgrund eines nennenswert progressiven Reibwertverlaufs über der Schlupfdrehzahl) gedämpft werden.

Es wird hier davon ausgegangen, dass beim Beispiel der Fig. 1 das Lamellenpaket 74 der radial inneren Lamellen-Kupplungsanordnung 60 ohne Sinterbeläge ausgeführt ist, da die radial äußere Lamellen-Kupplungsanordnung 64 vorzugsweise als Anfahrkupplung mit entsprechendem Schlupfbetrieb eingesetzt wird. Letzteres, also die Verwendung der radial äußeren Lamellen-Kupplungsanordnung als Anfahrkupplung, ist insoweit vorteilhaft, als dass aufgrund des größeren effektiven Reibradius diese Lamellen-Kupplungsanordnung mit geringeren Betätigungskräften (für die gleiche Momentenübertragungsfähigkeit) betrieben werden kann, so dass die Flächenpressung gegenüber der zweiten Lamellen-Kupplungsanordnung reduziert sein kann. Hierzu trägt auch bei, wenn man die Lamellen der ersten Lamellen-Kupplungsanordnung 64 mit etwas größerer radialer Höhe als die Lamellen der zweiten Lamellen-Kupplungsanordnung 72 ausbildet. Gewünschtenfalls können aber auch für das Lamellenpaket 74 der radial inneren (zweiten) Lamellen-Kupplungsanordnung 72 Reibbeläge aus Sintermaterial verwendet werden, vorzugsweise - wie erläutert - in Kombination mit Reibbelägen aus einem anderen Material, etwa Papier.

Während bei dem Lamellenpaket 74 der radial inneren Lamellen-Kupplungsanordnung 72 alle Innenlamellen Reibbelag-tragende Lamellen und alle Außenlamellen belaglose Lamellen sind, wobei die das Lamellenpaket axial begrenzenden Endlamellen Außenlamellen und damit belaglose Lamellen sind, sind beim Lamellenpaket 76 der ersten Lamellen-Kupplungsanordnung 64 die Innenlamellen belaglose Lamellen und die Außenlamellen einschließlich der Endlamellen 166, 170 Reibbelag-tragende Lamellen. Wenigstens die Endlamellen 166 und 168 weisen nach einer bevorzugten Ausbildung axial wesentlich dickere Belagtragelemente als die Belagtragelemente der anderen Außenlamellen auf und sind mit Belägen aus Sintermaterial ausgebildet, um die ein vergleichsweise großes Volumen aufweisenden Belagtragelemente der beiden Endlamellen als Wärmezwischenspeicher nutzbar zu machen. Wie beim Lamellenpaket 74 sind die belaglosen Lamellen axial dicker als die Lamellentragelemente der Reibbelag- tragenden Lamellen (mit Ausnahme der Endlamellen), um eine vergleichsweise große Wärmekapazität zur Wärmezwischenspeicherung bereitzustellen. Die axial innen liegenden Außenlamellen sollten zumindest zum Teil Reibbeläge aus einem anderen, einen progressiven Reibwertverlauf zeigenden Material, aufweisen, um für das Lamellenpaket insgesamt zumindest eine näherungsweise neutralen Reibwertverlauf über der Schlupfdrehzahl zu erreichen.

Weitere Einzelheiten der Doppelkupplung 12 gemäß dem beschriebenen Beispiel sind für den Fachmann ohne weiteres aus Fig. 1 entnehmbar. So ist die Axialbohrung im Ringabschnitt 36 der Kupplungsnabe 34, in der die Innenverzahnung 46 für die Pumpenantriebswelle ausgebildet ist, durch einen darin festgelegten Stopfen 180 öldicht verschlossen. Das Trägerblech 60 ist am Außenlamellenträger 62 durch zwei Halteringe 172, 174 axial fixiert, von denen der Haltering 172 auch die Endlamelle 170 axial abstützt. Ein entsprechender Haltering ist auch für die Abstützung des Lamellenpakets 74am Außenlamellenträger 70 vorgesehen.

Es sollte noch betreffend die Ausbildung der Außenlamellen der ersten Lamellen-Kupplungsanordnung 64 als Belag-tragende Lamellen erwähnt werden, dass in Verbindung mit der Zuordnung der Außenlamellen zur Eingangsseite der Kupplungseinrichtung eine bessere Durchflutung des Lamellenpakets 76 erreicht wird, wenn die Reibbeläge - wie herkömmlich regelmäßig üblich - mit Reibbelagnuten oder anderen Fluiddurchgängen ausgebildet sind, die eine Durchströmung des Lamellenpakets auch im Zustand des Reibeingriffs ermöglichen. Da die Eingangsseite sich auch bei ausgekuppelter Kupplungsanordnung mit der Antriebseinheit bzw. dem Koppelende 16 bei laufender Antriebseinheit mitdreht, kommt es aufgrund der umlaufenden Reibbelagnuten bzw. der umlaufenden Fluiddurchgänge zu einer Art Förderwirkung mit entsprechender besserer Durchflutung des Lamellenpakets. In Abweichung von der Darstellung in Fig. 1 könnte man auch die zweite Lamellen-Kupplungsanordnung dementsprechend ausbilden, also die Außenlamellen als Reibbelag-tragende Lamellen ausbilden.

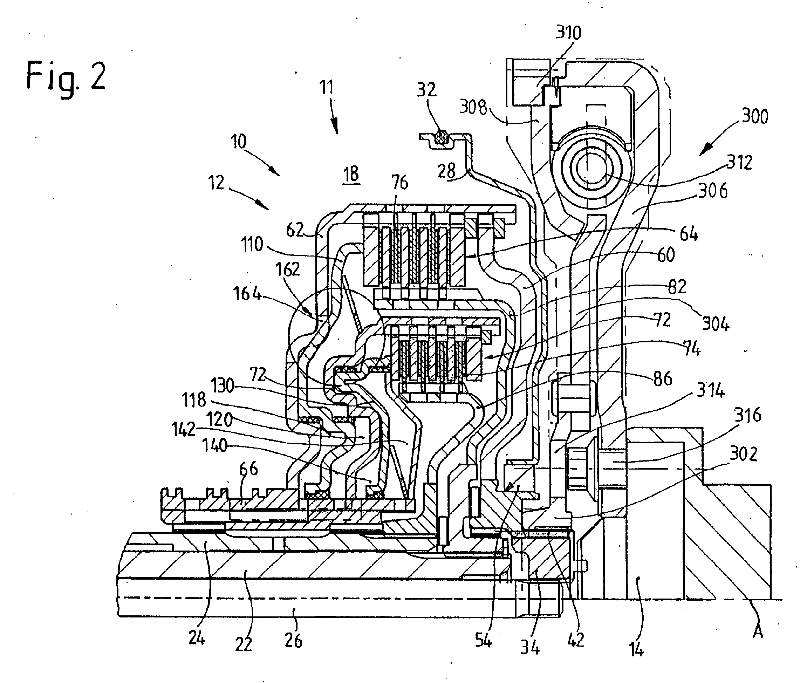

Im Folgenden werden anhand der Fig. 2 bis 11 weitere Beispiele von Mehrfach-Kupplungseinrichtungen, speziell von Doppel-Kupplungseinrichtungen, und von derartige Kupplungseinrichtungen aufweisenden Antriebssystemen, hinsichtlich verschiedener Aspekte erläutert. Soweit die Doppelkupplungen der Beispiele der Fig. 2 bis 11 dem Ausführungsbeispiel der Fig. 1 entsprechen, wurde der besseren Übersichtlichkeit wegen darauf verzichtet, alle Bezugszeichen der Fig. 1 auch in die Fig. 2 bis 11 zu übernehmen.

Beim Beispiel der Fig. 2 sind der erste Außenlamellenträger 62 und der erste Betätigungskolben 110 im Hinblick auf die Kühlölabflussöffnungen 162 und 164 auf spezielle Weise ausgebildet, um einerseits im Bereich des Außenlamellenträgers 72 der zweiten (inneren) Lamellen-Kupplungsanordnung axialen Platz zu sparen und andererseits, wenn gewünscht, eine Verdrehsicherung gegen eine Verdrehung des ersten Betätigungskolbens 110 gegenüber dem Außenlamellenträger 62 vorzusehen. Hierzu sind der erste Außenlamellenträger 62 und der erste Betätigungskolben 110 in Umfangsrichtung abwechselnd partiell ausgenommen, so dass nicht ausgenommene Stellen des Betätigungskolbens 110 in ausgenommene Stellen des Außenlamellenträgers 62 und nicht ausgenommene Stellen des Außenlamellenträgers 62 in ausgenommene Stellen des Betätigungskolbens 110 eingreifen. Das Vorsehen der genannten Verdrehsicherung ist insoweit sinnvoll, als dass eine zusätzliche Belastung der zwischen dem Außenlamellenträger 62 und dem Betätigungskolben 110 wirkenden Dichtungen durch Mikrorotationen in Folge von Motorungleichförmigkeiten verhindert werden können. Für diese Verdrehsicherung müssen der Betätigungskolben 110 und der Außenlamellenträger 62 auch im eingerückten Zustand der ersten Lamellen-Kupplungsanordnung 64 ineinander greifen, was sonst nicht erforderlich wäre.

Bei den Beispielen der Fig. 1 und 2 ist die Kupplungseinrichtung über die Kupplungsnabe 34 an der Antriebseinheit des Antriebsstrangs angekoppelt, und zwar vorzugsweise über einen Torsionsschwingungsdämpfer, wie in Fig. 2 als Beispiel gezeigt ist.

Die in Fig. 2 gezeigte Kombination aus einer Doppelkupplung 12 und einem Torsionsschwingungsdämpfer 300 zeichnet sich durch eine einfache Montage in einem Antriebsstrang aus. Das von der Doppelkupplung und dem Torsionsschwingungsdämpfer gebildete Antriebssystem 11 lässt sich also einfach in einen Antriebsstrang zwischen der jeweiligen Antriebseinheit (Motor) und dem Getriebe eingliedern. Hierzu trägt insbesondere bei, dass die Doppelkupplung 12 und der Torsionsschwingungsdämpfer 300 unabhängig voneinander am Getriebe (die Doppelkupplung) und an der Antriebseinheit (der Torsionsschwingungsdämpfer) montiert werden können, und dann das Getriebe und die Antriebseinheit samt der daran angebrachten Teilsysteme (Doppelkupplung bzw. Torsionsschwingungsdämpfer) auf einfache Weise zusammengefügt werden können unter Verkoppelung des Torsionsschwingungsdämpfers mit der Eingangsseite (hier der Kupplungsnabe 34), und zwar vermittels der Außenverzahnung 42 der Kupplungsnabe und einer zugeordneten Innenverzahnung eines Nabenteils 302 der von einem Scheibenteil 304 gebildeten Sekundärseite des Torsionsschwingungsdämpfers 300.

Um die Montage des Torsionsschwingungsdämpfers 300 an der Kurbelwelle zu erleichtern, weist das Scheibenteil 304 Werkzeug-Durchtrittsöffnungen 314 auf, durch die mittels eines entsprechenden Werkzeugs Schraubbolzen 316 festgezogen werden können, die das erste Deckblech 306 an der Kurbelwelle bzw. dem Koppelende der Kurbelwelle befestigen.

Die Primärseite des Torsionsschwingungsdämpfers 300 ist von einem an der Kurbelwelle angebrachten ersten Deckblech 306 und einem daran angebrachten zweiten Deckblech 308 gebildet, das einen Anlasserzahnkranz 310 aufweist, über den mittels eines nicht dargestellten Anlassers im Falle einer als Brennkraftmaschine ausgebildeten Antriebseinheit diese gestartet werden kann. Eine Dämpferelementenanordnung 312 des Torsionsschwingungsdämpfers 300 ist auf an sich bekannte Weise in Aussparungen des Scheibenteils 304 zwischen den beiden Deckblechen 306 und 308 aufgenommen, wobei die Deckbleche zwischen in Umfangsrichtung benachbarte Dämpferelemente eingreifende Einbuchtungen, Abstützteile oder dergleichen aufweisen, so dass insgesamt für eine primärseitige und sekundärseitige Abstützung der Dämpferelementenanordnung in Umfangsrichtung gesorgt ist. Die Dämpferelemente können unter Vermittlung von Federtellern, Gleitschuhen und dergleichen abgestützt und geführt sein.

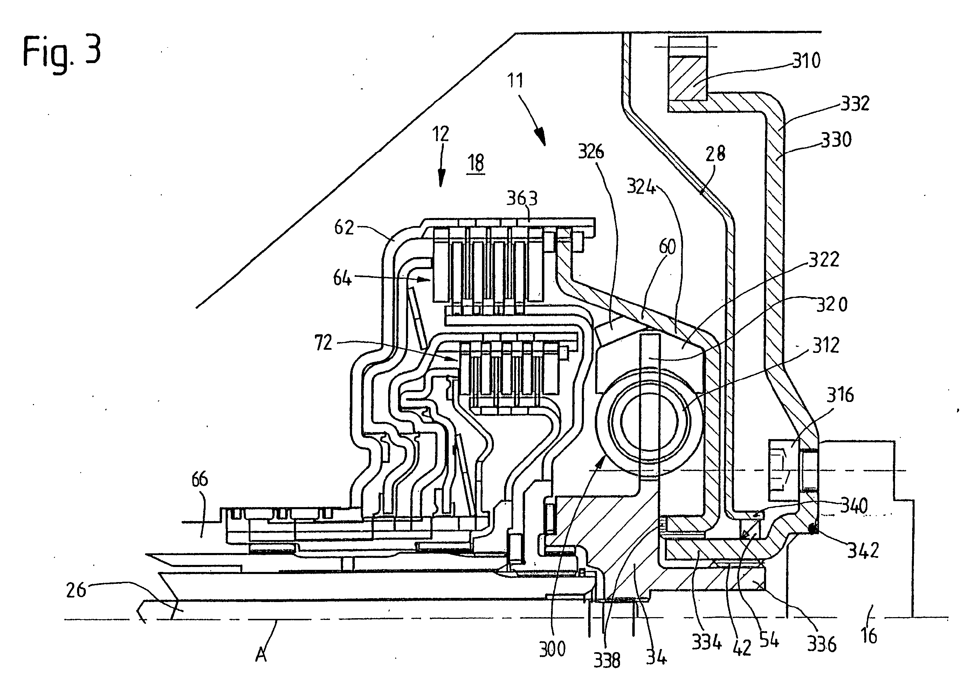

Weitere Beispiele von Antriebssystemen 11, umfassend eine Mehrfach-Kupplungseinrichtung,spezielleineDoppel-Kupplungseinrichtung und eine Torsionsschwingungsdämpferanordnung sowie ggf. eine beispielsweise von einem Kurbelwellenstartergenerator gebildete Elektromaschine werden anhand der Fig. 3 bis 11 erläutert.

Bei der Beschreibung der Beispiele der Fig. 3 bis 11 werden Ausführungen zu der jeweiligen Doppelkupplung 12 nur noch insoweit gemacht, als Änderungen gegenüber den vorangehend beschriebenen Ausführungsbeispielen zu erläutern sind. Die Doppelkupplungen 12 entsprechen hinsichtlich ihres inneren Aufbaus und ihrer Funktionsweise im Wesentlichen den Ausführungsbeispielen der Fig. 1 und 2, so dass auf eine Eintragung von Bezugszeichen für die verschiedenen Komponenten verzichtet werden kann. Der Einfachheit halber wird auch darauf verzichtet, alle an sich in einer Schnittdarstellung gezeigten Bauteile in den Figuren schraffiert darzustellen. Der Fachmann wird aus einem einfachen Vergleich der betreffenden Figur mit den Fig. 1 und 2 sofort erkennen, welche Bauteile in einer Schnittansicht dargestellt sind. Der Fachmann wird auch kleinere Unterschiede in der Detailausführung der Doppelkupplungen aus den Figuren erkennen.

Beim Antriebssystem 11 der Fig. 3 ist der Torsionsschwingungsdämpfer 300 in die Doppelkupplung integriert. Hierzu weist die Kupplungsnabe 34 Radialstege 320 auf, zwischen die die ineinander geschachtelten Dämpferelemente (Dämpferfedern) der Dämpferelementenanordnung 312 aufgenommen sind. Die Kupplungsnabe 34 dient als Primärseite des Torsionsschwingungsdämpfers 300.

Als Sekundärseite des Torsionsschwingungsdämpfers 300 dient beim Antriebssystem 11 der Fig. 3 das bei den vorstehenden Ausführungsbeispielen als "Trägerblech" bezeichnete Momentenübertragungsglied 60, das Einbuchtungen oder herausgedrückte Zungen oder sonstige Abstützelemente aufweist, an denen die Dämpferelementenanordnung 312 sekundärseitig in Umfangsrichtung abgestützt ist. Die Dämpferelemente der Dämpferelementenanordnung 312 sind unter Vermittlung einer Gleitelementanordnung 322 (beispielsweise umfassend an sich bekannte Gleitschuhe, Federteller oder sonstige Gleit- und Führungselemente) an schräg in radialer und axialer Richtung verlaufenden Abschnitten 324 des Momentenübertragungsblechs 60 geführt, zwischen denen im Blech 60 definierte Führungszungen 326 derart aus dem Blech herausgedrückt sind, dass eine in einer Querschnittsansicht gemäß der Figur dachförmige Führungsanordnung geschaffen ist, die nicht nur in Umfangsrichtung, sondern auch in axialer Richtung für Führung und Haltung sorgt.

Das Antriebssystem 11 weist eine Koppelanordnung auf, die zur Ankopplung der Doppelkupplung 12 an der Antriebseinheit, speziell am Koppelende 16 der Kurbelwelle dient. Die Koppelanordnung 320 ist von einer sogenannten Flexplatte (flexplate) 332 gebildet, die radial außen einen Anlasserzahnkranz 310 trägt, der als primärseitige Zusatzmasse in Bezug auf den Torsionsschwingungsdämpfer 300 wirkt. Die Flexplatte 332 ist radial innen mit einem sich in axialer Richtung erstreckenden Koppelflansch 334 ausgeführt, der eine Innenverzahnung zur Kopplung mit der Außenverzahnung 42 der Kupplungsnabe 34 aufweist. Die Außenverzahnung 42 ist beim gezeigten Ausführungsbeispiel an einem axialen Koppelflansch 336 der Kupplungsnabe 34 vorgesehen. Der stationäre Deckel 28 ist mittels einer Drehlageranordnung 54, die vorzugsweise auch Dichtungsfunktion erfüllt, am Koppelflansch 334 der Koppelanordnung 330 gelagert.

Da das Momentenübertragungsblech 60 der Sekundärseite und die Kupplungsnabe 34 der Primärseite des Torsionsschwingungsdämpfers 300 zugeordnet sind, kommt es zu Relativverdrehungen innerhalb eines vom Torsionsschwingungsdämpfer zugelassenen Drehwinkels zwischen der Kupplungsnabe 34 einerseits und dem Momentenübertragungsblech 60 andererseits. Das an dem ersten Außenlamellenträger 62 drehfest und in beide axiale Richtungen abgestützt angebrachte Momentenübertragungsblech 60 ist radial innen am Koppelflansch 334 der Koppelanordnung 330 gelagert, und zwar unter Vermittlung eines vorzugsweise auch Dichtungsfunktionen erfüllenden Gleitrings 338, der einen axialen Schenkelabschnitt zwischen einem axialen Randflansch 340 des Momentenübertragungsblechs 60 und dem Koppelflansch 334 sowie einen radialen Schenkel zwischen dem Randflansch 340 und der Kupplungsnabe 34 aufweist. Unter Vermittlung des letzteren Schenkels des Gleitrings 338 ist die Kupplungsnabe 34 in axialer Richtung hin zur Antriebseinheit am Momentenübertragungsglied 60 abgestützt, und die vom Momentenübertragungsglied 60 aufgenommenen Axialkräfte werden vom Außenlamellenträger 62 aufgenommen und über das Ringteil 66 abgeleitet, so dass sich insgesamt ein geschlossener Kraftfluss ergibt und dementsprechend weder die Antriebseinheit mit ihrer Kurbelwelle noch das Getriebe mit seinen Getriebeeingangswellen Kräfte aufbringen bzw. aufnehmen muss, um die Doppelkupplung 12 als Einheit axial zusammen zu halten.

Zur Abdichtung der Kühlöl der Doppelkupplung zu führenden Bereiche in Richtung zur Antriebseinheit hin ist beim Ausführungsbeispiel der Fig. 3 ein Dichtring 342 zwischen dem Koppelende 16 der Kurbelwelle und der Flexplatte 332 vorgesehen, der zusammen mit der beispielsweise als Radialwellendichtring ausgeführten Dichtungs- und Drehlageranordnung 54 sowie ggf. aufgrund einer etwaigen Dichtungsfunktion des Gleitrings 338 den Radial- und Axialbereich radial innerhalb der Koppelflansch 334, 336 und axial zwischen der Kupplungsnabe 34 und dem Koppelende 16 nach radial außen abdichtet.

Es sollte noch erwähnt werden, dass zur Erhöhung des Massenträgheitsmoments der Kurbelwelle zusätzlich zum Zahnkranz 310 noch eine Zusatzmassenanordnung an der Flexplatte vorgesehen sein könnte.

Beim Beispiel der Fig. 3 ist folgendes Konzept verwirklicht. Die Flexplatte 330 trägt den Zahnkranz 310 sowie ggf. eine Zusatzmassenanordnung. Sie bildet ferner eine Lauffläche für die das Drehlager 54, ggf. den Radialwellendichtering 54 und dient zur Herstellung der Antriebsverbindung zwischen der Eingangsseite (Kupplungsnabe 34) der Doppelkupplung und der Kurbelwelle, wobei die Eingangsseite der Doppelkupplung gleichzeitig die Primärseite des Torsionsschwingungsdämpfers 300 ist. Die Kupplungsnabe 34 nimmt im Falle der Regel-Momentenflussrichtung von der Antriebseinheit zum Getriebe das Drehmoment von der Flexplatte 330 ab und bildet den Antrieb für den Torsionsschwingungsdämpfer 300 und die Pumpenwelle 26. Das der Sekundärseite des Torsionsschwingungsdämpfers zugeordnete Momentenübertragungsblech 60, das zusammen mit dem Außenlamellenträger 62 eventuell auch als Kupplungsgehäuse aufgefasst werden könnte, ist radial auf der Flexplatte gelagert und stützt die Kupplungssnabe 34 axial ab. Der Außenlamellenträger 62 ist ebenso wie die übrigen Lamellenträger mit Durchflussöffnungen für Kühlmittel (Kühlöl) ausgeführt, so dass das den Lamellen zugeführte Kühlmittel- nach radial außen in den von der Getriebegehäuseglocke 18 gebildeten Aufnahmeraum abfließen kann, in den die Doppelkupplung eingebaut ist. Der etwa auf gleicher radialer Höhe wie die zweite, radial innen liegende Lamellen-Kupplungsanordnung angeordnete Torsionsschwingungsdämpfer 300 ist in das von dem Momentenübertragungsglied 60 und dem Außenlamellenträger 62 gebildete "Kupplungsgehäuse" aufgenommen, also gewissermaßen innerhalb eines "inneren Nassraums" der Doppelkupplung angeordnet, dem im Betrieb Kühlmittel (insbesondere Kühlöl) zugeführt wird, so dass dementsprechend auch der Torsionsschwingungsdämpfer 300 gut mit Kühlmittel versorgt wird, um diesen zu kühlen oder/und zu schmieren. Gemäß der hier gewählten Nomenklatur könnte der radial außerhalb des Außenlamellenträgers 62 und des Momentenübertragungsglieds 60 liegende Teil des von der Glocke 18 begrenzten Aufnahmeraums als "äußerer Nassraum" bezeichnet werden, in den die Doppelkupplung das Kühlmittel abgibt. Wäre der Torsionsschwingungsdämpfer in diesem "äußeren Nassraum" angeordnet, so könnte ohne gesonderte Maßnahmen dem Torsionsschwingungsdämpfer nicht ohne Weiteres in hinreichender Menge Kühlmittel zugeführt werden.

Die Montage der Antriebseinheit 11 kann beispielsweise in der Weise erfolgen, dass zuerst die Flexplatte 330 samt dem Zahnkranz 310 und dem O-Ring 342 am Motor montiert wird, und dass dann der Deckel bzw. das Dichtblech 28 samt dem Radialwellendichtring 54 montiert werden. Unabhängig hiervon kann die Doppelkupplung 12 samt darin integriertem Torsionsschwingungsdämpfer 300 als vormontierte Einheit am Getriebe montiert werden. Sind sowohl die Flexplatte 330 als auch die Doppelkupplung 12 montiert, können das Getriebe und der Motor zusammengefügt werden einschließlich der Herstellung der Drehlager- und Abdichtverbindung zwischen dem Deckel 28 und dem Koppelflansch 334 unter Vermittlung des Radialwellendichtrings 54 und der Herstellung der Drehmitnahmeverbindung über die Verzahnungen zwischen den beiden Koppelflanschen 334 und 336.

Erwähnt werden sollte noch, dass beim Beispiel der Fig. 3 die Ölpumpe und der Torsionsschwingungsdämpfer parallel geschaltet sind, so dass der Momentenfluss von der Antriebseinheit zur Ölpumpe nicht über den Torsionsschwingungsdämpfer verläuft, im Gegensatz zum Ausführungsbeispiel der Fig. 2, bei dem der Torsionsschwingungsdämpfer 300 und die Ölpumpe in Reihe geschaltet sind.

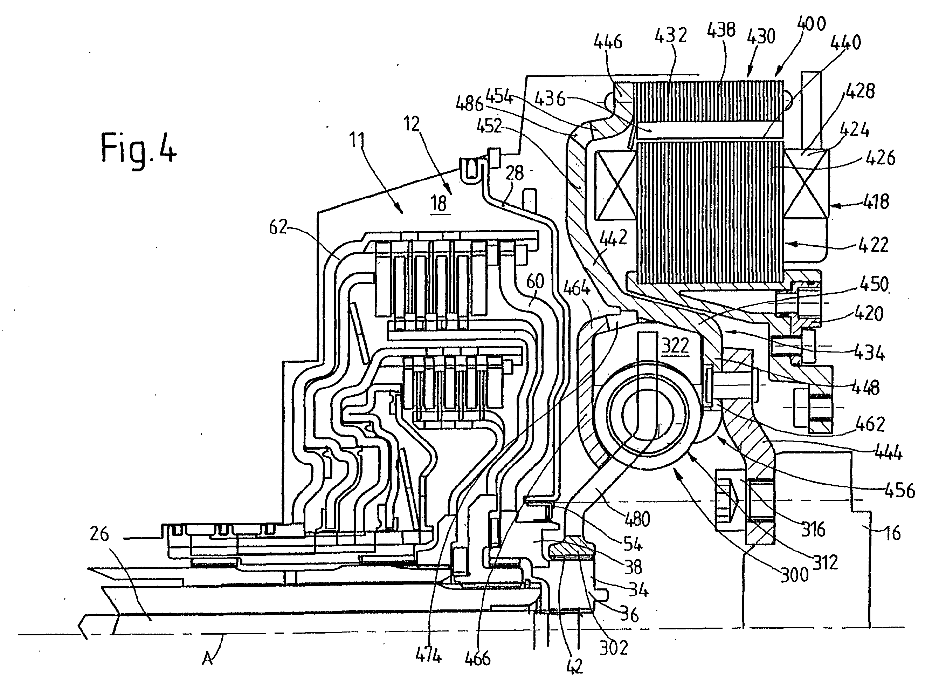

Ein weiteres Beispiel für ein vorteilhaftes Antriebssystem ist in Fig. 4 gezeigt. Die Doppelkupplung entspricht im Wesentlichen der Doppelkupplung der Fig. 1 und ist mit einer zweiteiligen, die Teile 36 und 38 aufweisenden Kupplungsnabe 34 ausgeführt.

Das Antriebssystem 11 umfasst neben der Doppelkupplung 12 ferner einen Torsionsschwingungsdämpfer 300 und eine allgemein mit 400 bezeichnete Elektromaschine, beispielsweise ein sogenannter Kurbelwellenstartergenerator, hier vom sogenannten Außenläufertyp. Die Elektromaschine 400 weist eine Statoranordnung 418 auf, die beispielsweise auf einem Statorträger 420 an einem nicht dargestellten Motorblock oder dergleichen getragen sein kann. Die Statoranordnung 418 umfasst einen Statorwechselwirkungsbereich 422 mit einer Mehrzahl von Statorwicklungen 424 und ein Joch bildenden Blechpaketen 426. Die Wicklungsköpfe 428 der Wicklungen 24 stehen seitlich über die Blechpakete 26 über. Die Elektromaschine 400 umfasst ferner eine Rotoranordnung 430 mit einem Rotorwechselwirkungsbereich 432 und einer nachfolgend noch detaillierter beschriebenen Trägeranordnung 434. Der Rotorwechselwirkungsbereich 432 umfasst eine Mehrzahl von an dessen Innenseite getragenen Permanentmagneten 436 sowie Blechpakete 438, die ein Joch des Rotorwechselwirkungsbereichs 432 bilden. Zwischen den Permanentmagneten 36 und dem Statorwechselwirkungsbereich 422 ist ein Luftspalt 440 gebildet, der zum Erhalt einer bestmöglichen Effizienz der Elektromaschine 400 so klein als möglich sein sollte.

Die Trägeranordnung 434 umfasst zwei Trägerelemente 442, 444. Das erste Trägerelement 442, das radial außen mit einem im Wesentlichen sich radial erstreckenden Abschnitt 446 den Rotorwechselwirkungsbereich 432 trägt, ist in einem radial weiter innen liegenden, sich ebenfalls im Wesentlichen radial erstreckenden Abschnitt 448 mit dem zweiten Trägerteil 444 durch eine Mehrzahl von in Umfangsrichtung aufeinander folgenden Nietbolzen oder dergleichen verbunden.

Radial außen anschließend an den sich im Wesentlichen radial erstreckenden Abschnitt 448 weist das erste Trägerelement 442 einen sich in Richtung der Drehachse A und geringfügig nach radial außen erstreckenden Verbindungsabschnitt 450 auf, welcher sich mit dem Statorwechselwirkungsbereich 422 in Achsrichtung überlappt bzw. diesen axial überbrückt. An diesen Verbindungsabschnitt 450 anschließend weist das erste Trägerelement 442 einen sich im Wesentlichen wieder nach radial außen erstreckenden Abschnitt 452 auf, der nach radial außen hin die Wicklungsköpfe 428 überbrückt und in einen sich im Wesentlichen in axialer Richtung erstreckenden, und die Wicklungsköpfe 28 zumindest teilweise in Axialrichtung überbrückenden Abschnitt 454 übergeht, an den sich der im Wesentlichen radial erstreckende Abschnitt 446 anschließt.

Als Primärseite 456 des Torsionsschwingungsdämpfers 300 dient der sich im Wesentlichen radial erstreckende Abschnitt 448 des ersten Trägerelements 442, der einen ersten Deckscheibenbereich 462 der Primärseite bildet. Ein zweiter Deckscheibenbereich 464 der Primärseite ist beispielsweise von einem gesonderten, beispielsweise aus Blech gestanzten und geeignet geformten Element gebildet, das einen sich im Wesentlichen radial erstreckenden Abschnitt 466 aufweist, der in Achsrichtung im Wesentlichen dem Abschnitt 448 des ersten Deckscheibenbereichs 462 gegenüberliegt. Der zweite Deckscheibenbereich 464 könnte grundsätzlich aber auch von in dem ersten Trägerelement 442 definierten und aus diesen entsprechend herausgedrückten Zungenabschnitten oder dergleichen gebildet sein. Handelt es sich um ein gesondertes Blechteil, kann dieses am ersten Trägerelement 442 angeschweißt sein. Auch eine formschlüssige Rastverbindung oder dergleichen ist denkbar.

Um Abrieb der Gleitelementanordnung 322 nach radial außen abgeben zu können, sind Partikelabgabeöffnungen 474 im Übergangsbereich zwischen dem zweiten Deckscheibenbereich 64 und dem Verbindungsabschnitt 450 sowie Partikelabgabeöffnungen 486 im Übergangsbereich zwischen den Abschnitten 452 und 454 vorgesehen.

Als Sekundärseite dient ein Zentralscheibenelement 480, das ein Nabenteil 302 aufweist, das mit einer Innenverzahnung ausgeführt ist, die in die Außenverzahnung 42 eingreift und so die Sekundärseite des Torsionsschwingungsdämpfers 300 an der Eingangsseite der Doppelkupplung 12 ankoppelt. Auf an sich bekannte Weise stützen sich die Dämpferelemente, beispielsweise Dämpferfedern, der Dämpferelementenanordnung 312 einerseits an der Primärseite, beispielsweise an an den Abschnitten 448, 464 und ggf. 450 gebildeten axialen bzw. radialen Ausbauchungen, und andererseits an der Sekundärseite, beispielsweise an Radialstegen des Zentralscheibenelements 480 ab, wobei Federteller als Abstützelemente zur besseren Druckverteilung vorgesehen sein können.

Zu näheren Einzelheiten der Ausbildung der Elektromaschine 400 und des Torsionsschwingungsdämpfers 300 wird auf die deutsche Patentanmeldung Az. 100 06 646.1 vom 15.02.2000 verwiesen.

Das Antriebssystem 11 der Fig. 4 zeichnet sich dadurch aus, dass eine Funktionsintegration für die Elektromaschine und den Torsionsschwingungsdämpfer 300 realisiert ist. Dadurch, dass das erste Trägerelement 442 wenigstens den ersten Deckscheibenbereich 462 der Primärseite bildet, wird die Teilevielfalt reduziert und Bauraum eingespart: Dabei wird eine optimale Raumausnutzung dadurch erreicht, dass der Torsionsschwingungsdämpfer 300 im Wesentlichen radial innerhalb der Statoranordnung 418 angeordnet ist. Die Rotoranordnung 430 bildet eine Primärmasse für den Torsionsschwingungsdämpfer 300, während das Zentralscheibenelement 480 samt den daran angekoppelten Komponenten der Doppelkupplung 12 gewissermaßen eine Sekundärmasse des Torsionsschwingungsdämpfers 300 bildet. Insbesondere der Außenlamellenträger 62 und die daran angeordneten Außenlamellen weisen eine nennenswerte sekundärseitige Trägheitsmasse auf.

Das Antriebssystem der Fig. 4 zeichnet sich, wie schon erwähnt, dadurch aus, dass es durch eine teilemäßige Verschmelzung der Elektromaschine 400 und des Torsionsschwingungsdämpfers 300 nur sehr wenig Bauraum beansprucht. Die Trägeranordnung 434 der Rotoranordnung 430 bildet einen der Kraftabstützung dienenden Bereich des Torsionsschwingungsdämpfers 300, so dass hier beispielsweise auf ein vollständiges separates Deckscheibenelement oder dergleichen verzichtet werden kann. Des Weiteren liegt insbesondere der Bereich 448, 450 der Trägeranordnung 434, welcher den Deckscheibenbereich 462 der Primärseite bildet, im Wesentlichen radial innerhalb der Statoranordnung 418 der als Außenläufermaschine ausgebildeten Elektromaschine 400. Durch die zusätzlich noch vorhandene zumindest teilweise axiale Überlappung der Elektromaschine 400, d. h. insbesondere der Statoranordnung 418 derselben, mit dem Torsionsschwingungsdämpfer 300 bzw. desses Dämpferelementenanordnung 312 wird der in Anspruch genommene Bauraum weiter minimiert.

Der Konstruktion der Fig. 4 liegt folgendes Grundkonzept zugrunde: Die Elektromaschine (Kurbelwellenstartergenerator) und der Torsionsschwingungsdämpfer 300 sind radial ineinander geschachtelt, während die Doppelkupplung axial benachbart dazu angeordnet ist. Der Außendurchmesser der Elektromaschine ist größer als der Außendurchmesser der Doppelkupplung 412, wodurch im Falle einer dem Normalfall entsprechenden kegelförmigen Getriebeglockenausbildung (motorseitig größerer Innendurchmesser, getriebeseitig kleinerer Innendurchmesser) eine optimale Bauraumausnutzung erreicht wird. Die Doppelkupplung liegt mit ihren Lamellen-Kupplungsanordnungen etwa im gleichen Radialbereich bzw. radial außerhalb des Torsionsschwingungsdämpfers.

Gemäß der gezeigten Konstruktion ist der Torsionsschwingungsdämpfer 300 für einen trocken laufenden Betrieb vorgesehen, er kann aber auch mit wenigstens einer Kammer für die Dämpferelementenanordnung ausgeführt sein, um einen nasslaufenden Betrieb ähnlich wie bei einem Zwei-Massen-Schwungrad zu ermöglichen.

Wie beim Beispiel der Fig. 2 sind die Ölpumpe und der Torsionsschwingungsdämpfer 300 in Reihe geschaltet, so dass nicht nur die Doppelkupplung 12, sondern auch die Ölpumpe schwingungsgedämpft über den Torsionsschwingungsdämpfer 300 angetrieben wird.

Die Montage erfolgt bevorzugt auf folgende Weise: Eine erste, von der Statoranordnung 418 und dem Statorträger 420 gebildete Einheit und eine zweite, von der Rotoranordnung 430 und der Trägeranordnung 434 und dem Torsiorisschwingungsdämpfer 300 gebildete zweite Einheit werden jeweils als vormontierte Einheit an der Antriebseinheit montiert. Ebenso wird die Doppelkupplung 12 als vormontierte Einheit am Getriebe in der Getriebeglocke 18 montiert und der Deckel 28 unter Anordnung des Radialwellendichtrings 54 zwischen dem radial inneren Flansch des Deckels und der Kupplungsnabe 36 in Stellung gebracht. Danach werden das Getriebe und die Antriebseinheit zusammengefügt, wobei die Innenverzahnung des Nabenteils 302 der Sekundärseite und die Außenverzahnung 42 der Kupplungsnabe 34 in gegenseitigen Eingriff gebracht werden.

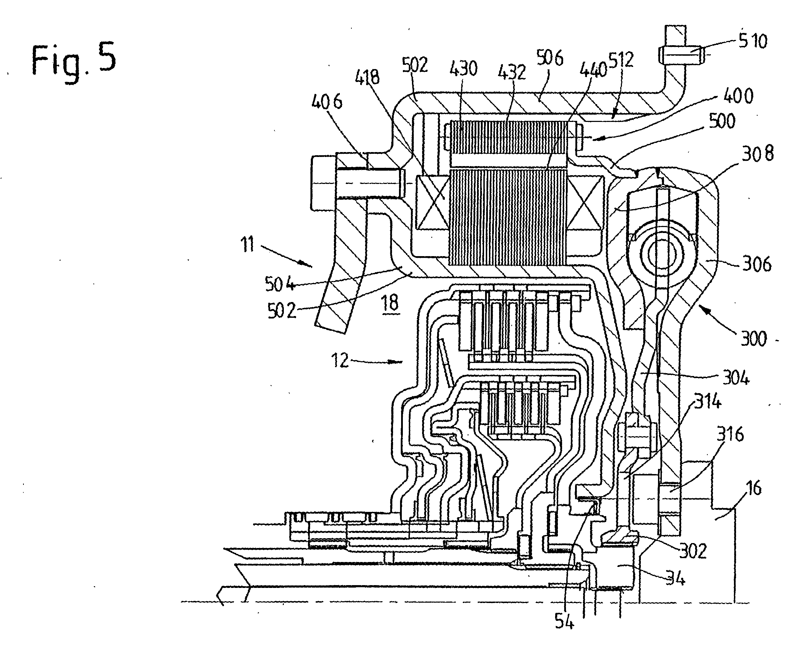

Das Antriebssystem 11 der Fig. 5 entspricht hinsichtlich der Doppelkupplung 12 und dem Torsionsschwingungsdämpfer 300 im Wesentlichen dem Beispiel der Fig. 2. Auf einen Anlasserzahnkranz 310 ist beim gezeigten Ausführungsbeispiel aber verzichtet. Statt dessen weist das Antriebssystem 11 eine beispielsweise als Kurbelwellenstatorgenerator dienende Elektromaschine 400 auf, deren Rotoranordnung 430 mittels einem Tragring oder Tragelementen 500 an der von den Deckblechen 306, 308 gebildeten Primärseite des Torsionsschwingungsdämpfers 300 gehalten ist. Ein am Getriebe angebrachter Statorträger 502, beispielsweise ein Guss- oder Ziehteil, trägt die radial außerhalb der Doppelkupplung 12 angeordnete Statoranordnung 418. Der Statorträger weist einen radial unteren Abschnitt 504 und einen radial oberen Abschnitt 506 auf, zwischen denen die Statoranordnung 418 und die Rotoranordnung 430 angeordnet sind. Der mit 406 bezeichnete Fügespalt zwischen dem Statorträger 502 und der Getriebegehäuseglocke ist abgedichtet. Ferner ist ein Radialwellendichtring 54 zwischen der Kupplungsnabe 34 und einem radial inneren Flasch des Statorträgers 502 wirksam. Der Statorträger 502 ersetzt somit den Deckel 28 des Ausführungsbeispiels der Fig. 1 und begrenzt den die Doppelkupplung aufnehmenden Aufnahmeraum 18, der als Nassraum dient.

Der Statorträger 502 kann über Passstifte 510 an der Antriebseinheit (Motor) zentriert sein und kann an der Antriebseinheit angeschraubt sein. Das Getriebegehäuse kann an der Antriebseinheit oder/und am Statorträger befestigt sein, und zwar radial innerhalb oder/und radial außerhalb des Luftspalts 440 der Elektromaschine 400.

Die Montage der Antriebseinheit 11 der Fig. 5 erfolgt am besten auf folgende Weise: Der Torsionsschwingungsdämpfer 300 samt der Rotoranordnung 430 wird an der Kurbelwelle anmontiert. Es wird dann der Statorträger 502 samt der Statoranordnung 418 an der Antriebseinheit montiert; wofür der Statorträger eine Führungsschiene 512 aufweist, die über die Rotoranordnung 430 gleitet. Unabhängig davon wird die Doppelkupplung 12 in die Gehäuseglocke des Getriebes eingesetzt. Danach werden das Getriebe und die Antriebseinheit (der Motor) zusammengefügt, wobei einerseits die den Torsionsschwingungsdämpfer mit der Doppelkupplung verkoppelten Verzahnungen in gegenseitigen Eingriff gebracht werden und andererseits der Radialwellendichtring 54 ordnungsgemäß zwischen dem inneren Flansch des Statorträgers 502 und der Kupplungsnabe 34 angeordnet wird.

Es wird noch darauf hingewiesen, dass beim gezeigten Beispiel die Verzahnung zwischen dem Nabenteil 302 und der Kupplungsnabe 34 radial innerhalb der Kurbelwellenschrauben 316 angeordnet ist, um die radiale Abmessung der Kupplungsnabe 34 und dementsprechend der Durchmesser des Radialwellendichtrings 54 vergleichsweise klein zu halten, so dass Reibungsverluste und der Verschleiß des Radialwellendichtrings minimiert werden.

Eine andere Möglichkeit für die Montage ist, dass der Torsionsschwingungsdämpfer 300 samt der Rotoranordnung 430 und der Statoranordnung 418 einschließlich dem Statorträger 502 als vormontierte Einheit an der Kurbelwelle bzw. dem Motorblock angeschraubt werden, wobei eine radiale Verriegelung der Rotoranordnung 430 einerseits und der Statoranordnung 418 andererseits vorteilhaft vorgesehen werden könnte. In Abweichung von der gezeigten Ausführungsform müsste der Innendurchmesser des Radialwellendichtrings bzw. dessen Sitz am Statorträger 502 radial außerhalb der Kurbelwellenverschraubung 316 liegen, um das erste Deckblech 306 am Koppelende 16 der Kurbelwelle anbringen zu können (andernfalls wären die Schrauben 316 nicht zugänglich). Unabhängig hiervon wird die Doppelkupplung 12 am Getriebe montiert. Anschließend werden das Getriebe und die Antriebseinheit zusammengefügt mit Verschraubung des Getriebes am Statorträger 502.

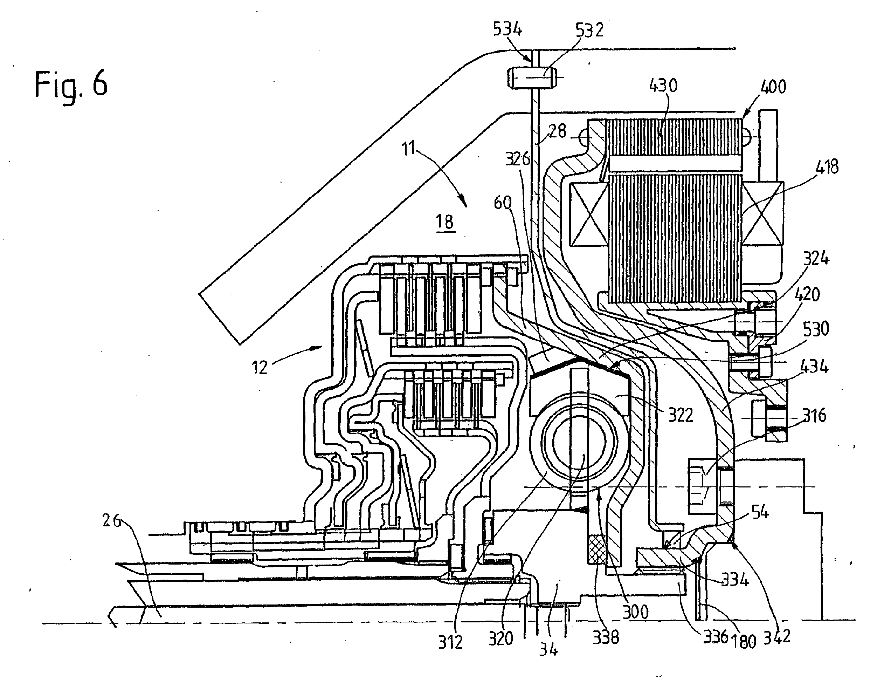

Das Beispiel der Fig. 6 entspricht hinsichtlich der Doppelkupplung 12 und der Integration des Torsionsschwingungsdämpfers 300 darin im Wesentlichen dem Beispiel der Fig. 3, so dass auf die Ausführungen zu dieser Figur verwiesen werden kann. Erwähnt werden sollte noch, dass die Gleitelemente und Federschuhe 322 in einer Gleitschale 530 geführt sind, um die bei Relativverdrehungen zwischen der Kupplungsnabe 34 und dem Momentenübertragungsglied 60 im Torsionsschwingungsdämpfer auftretende Reibung zu minimieren. Anstelle der Flexplatte 332 ist eine Trägeranordnung 434 an der Kurbelwelle angeschraubt, die die Rotoranordnung 430 einer Elektromaschine 400 trägt. Die Elektromaschine 400 entspricht der Elektromaschine 400 der Fig. 4, wenn man davon absieht, dass gemäß Fig. 6 der Torsionsschwingungsdämpfer 300 nicht mit der Elektromaschine integriert ist, sondern in die Doppelkupplung 12 integriert ist. Die Trägeranordnung 434 erfüllt also nur noch insoweit eine Doppelfunktion, als dass sie einen Koppelflansch 334 aufweist, der über Verzahnungen mit dem Koppelflansch 336 der Kupplungsnabe 34 koppelt. Auch beim Beispiel der Fig. 6 ist der Torsionsschwingungsdämpfer 300 radial innerhalb der Statoranordnung 418 angeordnet und überlappt sich teilweise axial mit dieser.

Erwähnt werden sollte noch, dass bei 342 ein O-Ring vorgesehen seien könnte, insbesondere wenn auf das eingeschweißte Dichtblech 180 verzichtet wird.

Der Deckel 28 ist mittels Passstiften 532 am Getriebe zentriert und in einen Fügespalt zwischen Getriebe und Antriebseinheit aufgenommen. Zum Getriebe hin ist der Fügespalt bei 534 abgedichtet, so dass der als "äußerer Nassraum" dienende Aufnahmeraum hinreichend zur Antriebseinheit hin abgedichtet ist.

Es soll noch auf folgende Möglichkeiten hingewiesen werden: Beim gezeigten Ausführungsbeispiel ist die Dichtscheibe 180 am Koppelflansch 334 angeschweißt. Sie könnte aber auch eingeklipst sein. Die Gleitschale 530 braucht nicht zwingend mit Gleitelementen und dergleichen kombiniert sein, die Dämpfungselemente, insbesondere Dämpferfedern, können auch direkt in die Gleitschale aufgenommen sein. Betreffend den zwischen dem Deckel 28 und dem Koppelflansch 334 angeordneten Radialwellendichtring wurde bei der in Fig. 6 gezeigten Ausführungsform der Durchmesser sehr gering gehalten; dieser liegt noch innerhalb der Kurbelwellenschrauben 316. Hierdurch werden Reibungsverluste und Verschleiß am Radialwellendichtring minimiert. Wie schon erwähnt wurde, dient der Träger 434 für die Rotoranordnung 430 gleichzeitig als Abtriebselement zur Ankopplung der Eingangsseite der Doppelkupplung, die der Primärseite des Torsionsschwingungsdämpfers entspricht. Unter Vermittlung der Kupplungsnabe 34 ist auch die Antriebswelle 26 der Ölpumpe an diesem Abtriebselement angekoppelt, wobei der Momentenfluss zur Pumpe nicht über den Torsionsschwingungsdämpfer verläuft.

Die Montage des Antriebssystems 11 in einem Antriebssstrang kann zweckmäßig beispielsweise auf folgende Weise erfolgen: Es wird die Statoranordnung 418 am Motorblock montiert. Anschließend wird der Rotorträger 434 samt der daran angebrachten Rotoranordnung 430 an der Kurbelwelle montiert. Anschließend wird das Dichtblech 28 mit dem Radialwellendichtring 54 in Stellung gebracht und am Motor montiert. Unabhängig davon wird die Doppelkupplung 12 mit dem darin integriertem Torsionsschwingungsdämpfer 300 als vormontierte Einheit am Getriebe in der Getriebeglocke montiert. Schließlich werden das Getriebe und der Motor zusammengefügt unter Herstellung der Drehmitnahmeverbindung zwischen den Koppelflanschen 334 und 336.

Zu den Torsionsschwingungsdämpferanordnungen der vorstehend behandelten Ausführungsbeispiele kann noch nachgetragen werden, dass es sich selbstverständlich nichtum "konventionelle" Torsionsschwingungsdämpfer handeln muss, sondern dass grundsätzlich alle Typen von Torsionsschwingungsdämpfern in Betracht kommen, insbesondere auch Torsionsschwingungsdämpfer des Zwei-Massen-Schwungrad-Typs, speziell auch Zwei-Massen-Schwungrad-Torsionsschwingungsdämpferdes Planetenrad-Typs, beispielsweise von der aus der DE 199 58 813 A1 bekannten Art.

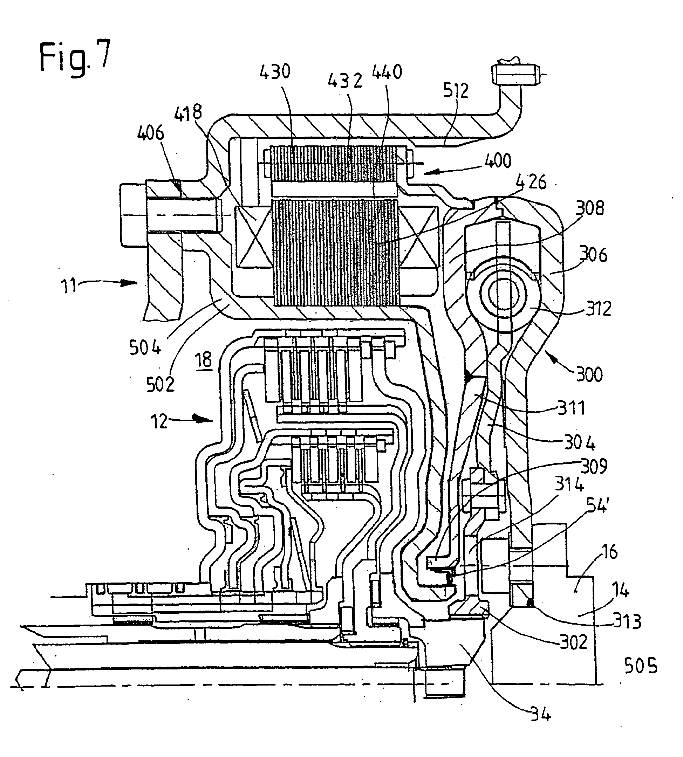

Fig. 7 zeigt eine Variante des Antriebssystems 11 der Fig. 5, bei der der Torsionsschwingungsdämpfer 300 in den vom Statorträger 502 begrenzten Nassraum der Doppelkupplung 12 einbezogen ist. Hierzu ist das Deckblech 308 des Torsionsschwingungsdämpfers nach radial innen verlängert bis in die Nähe eines radial inneren, sich axial in Richtung zur Antriebseinheit erstreckenden Bund 505 des Statorträgers 502, und anstelle einer Dichtung zwischen dem Statorträger und der Kupplungsnabe 34 entsprechend dem Ausführungsbeispiel der Fig. 5 ist nunmehr eine Dichtung 54' zwischen dem Bund 505 und einem radial inneren Bundabschnitt 309 eines das Deckblech 308 nach radial innen verlängernden Deckblechabschnitts 311 vorgesehen. Das Deckblech 308 und der Deckblechabschnitt 311 können einteilig sein oder es kann sich um zusammengeschweißte Bleche handeln.

Wie aus Fig. 7 zu erkennen, ist ein die Dämpferelementenanordnung 312 aufnehmender Innenraum des Torsionsschwingungsdämpfers 300 am die Doppelkupplung 12 aufnehmenden Glockeninnenraum angeschlossen, und es kann Kühlöl zwischen dem Bund 505 und dem Nabenteil 302 nach radial außen durchtreten, so dass im Betrieb die Dämpferelementenanordnung 312 in einem Ölbad angeordnet und betätigt werden wird, so dass einem Verschleiß der beteiligten Komponenten und der Entwicklung von Geräuschen entgegengewirkt wird. Die hiermit vorgeschlagene Ankopplung eines Innenraums des Torsionsschwingungsdämpfers an den Nassraum der Doppelkupplung auch für den Fall, dass der Torsionsschwingungsdämpfer nicht strukturell in die Doppelkupplung integriert ist (etwa ähnlich dem Beispiel der Fig. 3), ist insbesondere auch für Torsionsschwingungsdämpfer des Zwei-Massen-Schwungrad-Typs von Interesse, da hierdurch eine eigene Füllung des Schwungrads etwa mit Fett mit entsprechenden Dichtungsmaßnahmen entfallen kann. Es lässt sich so ein einfacheres und kostengünstigeres Zwei-Massen-Schwungrad (ZMS) realisieren.

Es ist noch darauf hinzuweisen, dass zur Abdichtung des kombinierten, vom Glockeninnenraum und dem Innenraum des Torsionsschwingungsdämpfers gebildeten "Nassraum" zur Antriebseinheit hin eine Dichtung 313, etwa ein O-Ring, zwischen dem Deckblech 306 und dem Koppelende 16 der Abtriebswelle 15 vorgesehen sein kann.

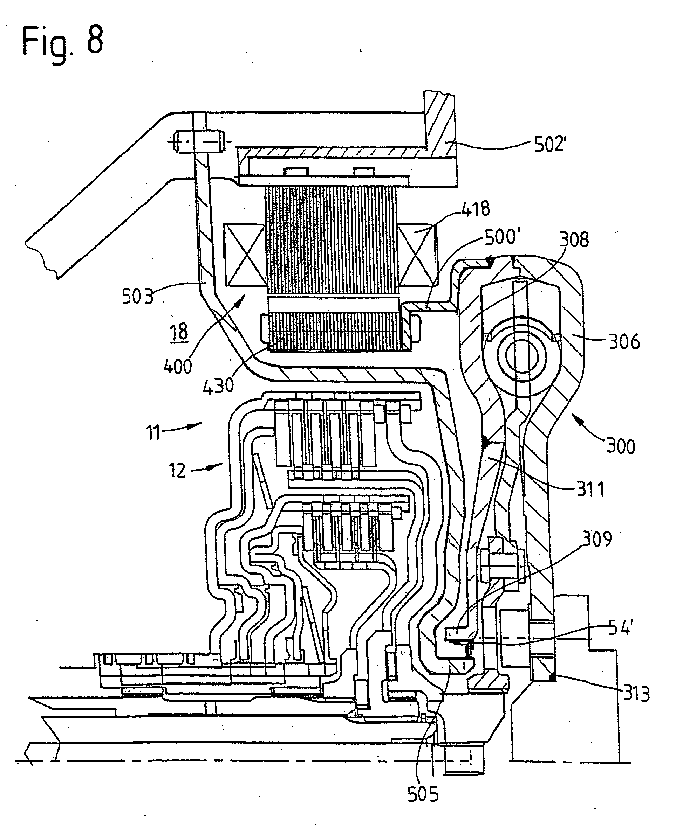

Gemäß Fig. 7 ist die Elektromaschine 400 als Außenläufer-Elektromaschine ausgeführt. Fig. 8 zeigt eine Ausführungsvariante, bei der die Elektromaschine als Innenläufer-Elektromaschine ausgeführt ist, bei der also die Rotoranordnung 430 radial innerhalb der Statoranordnung 418 angeordnet ist. Die Rotoranordnung 430 ist mittels eines Tragrings oder mittels Tragelementen 500' an der von den Deckblechen 306 und 308 gebildeten Primärseite des Torsionsschwingungsdämpfers 300 gehalten. Die Statoranordnung 418 ist von einem getriebeseitig festgelegten Statorträger 502' gehalten. Der die Doppelkupplung 12 enthaltende Glockeninnenraum ist nunmehr in Richtung zur Antriebseinheit hin durch eine Wandung 503 verschlossen, die keine Tragfunktion in Bezug auf die Statoranordnung 418 aufweist. Ansonsten entspricht die Wandung 503 aber im Wesentlichen der als Statorträger fungierenden Wandung 502 des Beispiels der Fig. 7, und weist insbesondere auch den Bund 505 auf, der über die Dichtung 54' mit dem Randabschnitt oder Bund 309 des Deckblechabschnitts 311 zusammenwirkt.

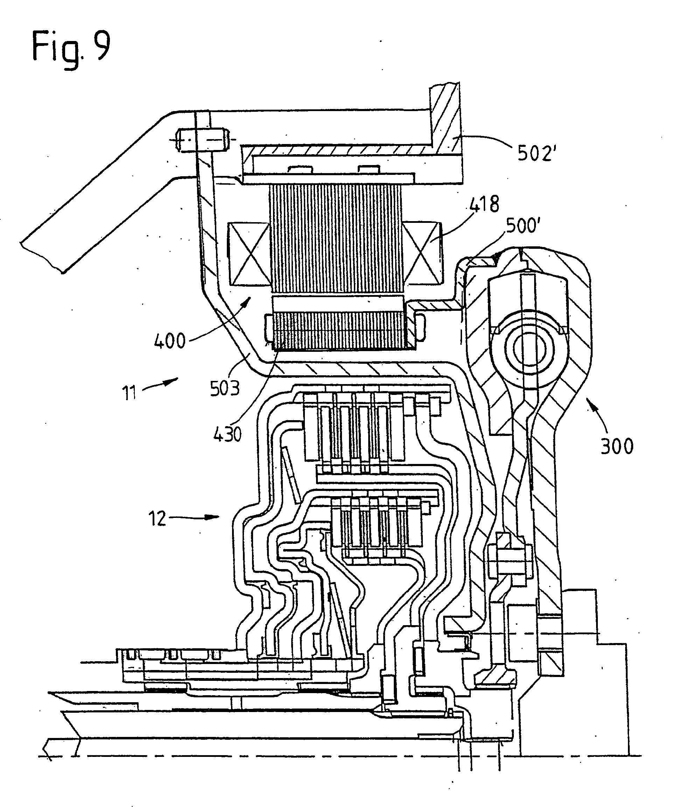

Fig. 9 entspricht hinsichtlich der Ausbildung der Elektromaschine und der Anbindung der Rotoranordnung 430 am Torsionsschwingungsdämpfer 300 dem Ausführungsbeispiel der Fig. 8. Der Innenraum des Torsionsschwingungsdämpfers 300 ist bei der Konstruktion der Fig. 9 aber nicht am Nassraum der Doppelkupplung 12 angeschlossen; insoweit entspricht das Ausführungsbeispiel der Fig. 9 dem Ausführungsbeispiel der Fig. 5.

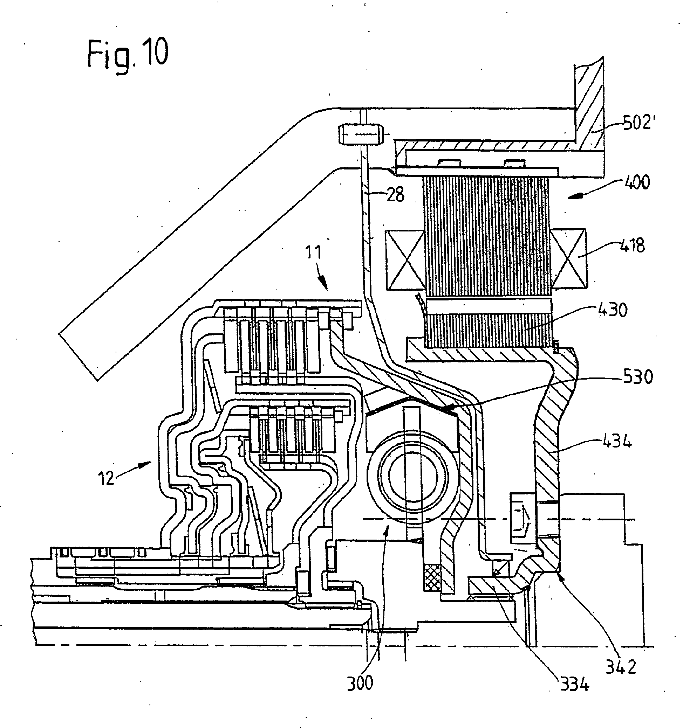

Fig. 10 zeigt eine Variante des Beispiels der Fig. 6. Die Doppelkupplung 12 der Fig. 10 ist im Wesentlichen identisch zur Doppelkupplung der Fig. 6 ausgeführt und weist einen integrierten Torsionsschwingungsdämpfer 300 auf. Im Gegensatz zur Fig. 6, bei der die Elektromaschine 400 als Außenläufermaschine ausgeführt ist, ist bei der Konstruktion der Fig. 10 die Elektromaschine als Innenläufermaschine ausgeführt mit entsprechender Umgestaltung der Trägeranordnung 434.

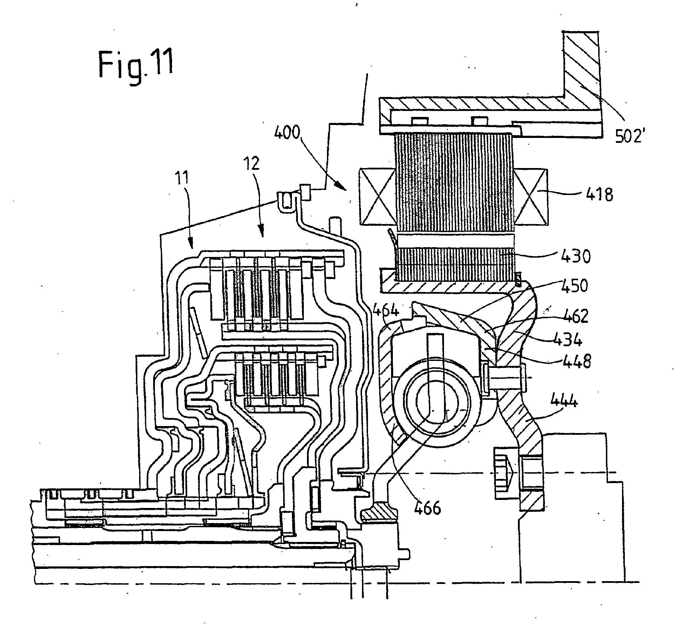

Fig. 11 zeigt eine Variante des Antriebssystems der Fig. 4. Gemäß Fig. 11 ist die Elektromaschine 400 als Innenläufermaschine ausgeführt. Die Rotoranordnung 430 ist an einer Trägeranordnung 434 gehalten, die den Deckscheibenbereich 462 der Primärseite des Torsionsschwingungsdämpfers aufweist. Gemäß Fig. 11 trägt das an der Abtriebswelle der Antriebseinheit angebrachte Trägerelement 444 radial außen unmittelbar die Rotoranordnung 430.

Weitere Einzelheiten der Doppelkupplungen 12 bzw. des Antriebssystems gemäß den verschiedenen Ausführungsbeispielen und insbesondere Unterschiede zwischen den verschiedenen Doppelkupplungen sind vom Fachmann ohne Weiteres den Figuren entnehmbar.

## Patentansprüche

1. Antriebssystem, insbesondere zur Eingliederung in einen Antriebsstrang eines Kraftfahrzeugs, der eine Antriebskraft zwischen einer Antriebseinheit, ggf. einer Brennkraftmaschine, und angetriebenen Rädern übertragen kann, umfassend:
- eine Mehrfach-Kupplungseinrichtung (12), ggf. Doppel-Kupplungseinrichtung (12), sowie umfassend:
eine Elektromaschine (400) vom Innenläufertyp, durch welche eine der Eingangs seite zugeordnete Komponente (34) zur Drehung um eine der Elektromaschine (400) und der Kupplungseinrichtung (12) gemeinsame Achse (A) antreibbar oder/und bei Drehung der Komponente (34) um die Achse elektrische Energie gewinnbar ist, wobei die Elektromaschine eine Statoranordnung (418) mit einem Statorwechselwirkungsbereich (422) und eine Rotoranordnung (430) mit
einem Rotorwechselwirkungsbereich (432) umfasst;
und
- eine Torsionsschwingungsdämpferanordnung (300), die bezogen auf die Referenz-Momentenflussrichtung eine Primärseite (306, 308; 448, 450, 464; 34, 320; 370; 354) und eine gegen die Wirkung einer Dämpferelementenanordnung (312) um eine der Torsionsschwingungsdämpferanordnung und der Mehrfach-Kupplungseinrichtung gemeinsame Achse (A) bezüglich der Primärseite drehbare Sekundärseite (304; 480; 60; 354; 62) aufweist, wobei die Sekundärseite mit der Eingangsseite (34) im Sinne einer Drehmitnahmeverbindung gekoppelt oder koppelbar ist oder dieser entspricht,
**dadurch gekennzeichnet, dass**
die Rotoranordnung mittels eines Tragelementes (500') an der von Deckblechen (306, 308) gebildeten Primärseite des Torsionsschwingungsdämpfers gehalten und die Statoranordnung von einem getriebeseitig festgelegten Statorträger (502') gehalten ist,
die Kupplungseinrichtung als nasslaufende Mehrfach-Kupplungseinrichtung ausgebildet ist und bezogen auf eine Referenz-Momentenflussrichtung eine ggf. der Antriebseinheit zugeordnete Eingangsseite (34; 354) und wenigstens zwei ggf. einem Getriebe des Antriebsstrangs zugeordnete Ausgangsseiten (80, 84) aufweist und die ansteuerbar ist, Drehmoment zwischen der Eingangsseite einerseits und einer ausgewählten der Ausgangsseiten andererseits zu übertragen;
und wobei ein die Doppelkupplung (12) enthaltender Glockeninnenraum in Richtung zur Antriebseinheit durch eine Wandung (503) verschlossen ist.

2. Antriebssystem nach Anspruch 1, **dadurch gekennzeichnet, dass** das Antriebssystem (11) ein einer Antriebseinheit zugeordnetes erstes Teilsystem (330; 300; 434, 430) und ein einem Getriebe zugeordnetes zweites Teilsystem (12) aufweist, wobei zur Eingliederung des Antriebssystems in einen Antriebsstrang zwischen der Antriebseinheit und dem Getriebe das Getriebe mit dem daran angeordneten ersten Teilsystem und die Antriebseinheit mit dem daran angeordnetem zweiten Teilsystem unter Verkopplung der beiden Teilsysteme zusammenfügbar sind.

3. Antriebssystem nach Anspruch 2, **dadurch gekennzeichnet, dass** zur Eingliederung des Antriebssystems (11) in einen Antriebssstrang zwischen einer Antriebseinheit und einem Getriebe zuerst das erste Teilsystem (330; 300; 434, 430) an der Antriebseinheit anmontierbar und das zweite Teilsystem (12) am Getriebe anmontierbar sind und dass dann das Getriebe und die Antriebseinheit unter Verkopplung der beiden Teilsysteme zusammenfügbar sind.

4. Antriebssystem nach Anspruch 2 oder 3, **dadurch gekennzeichnet, dass** das erste Teilsystem ein erstes Koppelglied (302; 334) und das zweite Teilsystem ein zweites Koppelglied (34) aufweist, die jeweils mit einer Mitnahmeformation ausgeführt sind, die durch im wesentlichen axiale Relativbewegung bezogen auf eine den Teilsystemen gemeinsame Achse in gegenseitigen Drehmitnahmeeingriff bringbar sind zur Verkoppelung der beiden Teilsysteme beim Zusammenfügen des Getriebes und der Antriebseinheit.

5. Antriebssystem nach Anspruch 4, **dadurch gekennzeichnet, dass** die Mitnahmeformationen als Innenverzahnung und Außenverzahnung (42) ausgeführt sind.

6. Antriebssystem nach einem der Ansprüche 2 bis 5, **dadurch gekennzeichnet, dass** das erste Teilsystem die Torsionsschwingungsdämpferanordnung (300) und das zweite Teilsystem die Mehrfach-Kupplungseinrichtung (12) aufweist.

7. Antriebssystem nach einem der Ansprüche 2 bis 5, **dadurch gekennzeichnet, dass** das erste Teilsystem die Elektromaschine (400) und das zweite Teilsystem die Mehrfach-Kupplungseinrichtung (12) aufweist.

8. Antriebssystem nach einem der Ansprüche 2 bis 5, **dadurch gekennzeichnet, dass** das erste Teilsystem die Rotoranordnung und das zweite Teilsystem die Statoranordnung und die Mehrfach-Kupplungseinrichtung aufweist.

9. Antriebssystem nach einem der Ansprüche 7 oder 8, **dadurch gekennzeichnet, dass** das erste Teilsystem die Torsionsschwingungsdämpferanordnung (300) aufweist.

10. Antriebssystem nach einem der Ansprüche 2 bis 9, dass wenigstens eines der Teilsysteme als vormontierte Einheit an der Antriebseinheit bzw. dem Getriebe anmontierbar ist.

11. Antriebssystem nach einem der Ansprüche 1 bis 14, **dadurch gekennzeichnet, dass** die Mehrfach-Kupplungseinrichtung (12) eine einer ersten Getriebeeingangswelle (22) eines Getriebes des Antriebsstrangs zugeordnete erste Kupplungsanordnung (64) und eine einer zweiten Getriebeeingangswelle (24) des Getriebes zugeordnete zweite Kupplungsanordnung (72) aufweist zur Momentenübertragung zwischen der Antriebseinheit und dem Getriebe, wobei vorzugsweise von den Getriebeeingangswellen wenigstens eine als Hohlwelle (22, 24) ausgebildet ist und eine (22) der Getriebeeingangswellen durch die andere, als Hohlwelle ausgebildete Getriebeeingangswelle (24) verläuft.

12. Antriebssystem nach Anspruch 11, **dadurch gekennzeichnet, dass** die Kupplungsanordnungen als Lamellen-Kupplungsanordnungen (64, 72) ausgebildet sind, von denen vorzugsweise eine radial äußere Kupplungsanordnung (64) eine radial innere Kupplungsanordnung (72) ringartig umschließt.

13. Antriebssystem nach einem der Ansprüche 10 bis 12, **dadurch gekennzeichnet, dass** die Mehrfach-Kupplungseinrichtung eine als Eingangsseite dienende oder dieser zugeordnete Kupplungseinrichtungsnabe (34) umfasst, die eine Mitnahmeformation, ggf. Außenverzahnung (42), zur Ankopplung der Torsionsschwingungsdämpferanordnung (300) oder zur Ankoppelung eines Abtriebselements (330) der Antriebseinheit oder/und eines Koppelelements (434) der Elektromaschine (400) aufweist oder/und die eine Mitnahmeformation, ggf. Innenverzahnung, zur Ankoppelung einer getriebeseitig angeordneten Betriebsfluidpumpe, ggf. Ölpumpe, über eine Pumpenantriebswelle (26) aufweist.

14. Antriebssystem nach einem der Ansprüche 1 bis 13, dass das Antriebssystem wenigstens ein Bauteil aufweist, welches funktionsmäßig oder/und strukturell oder/und zumindest bereichsweise räumlich in wenigstens zwei von der Mehrfach-Kupplungseinrichtung (12), der Torsionsschwingungsdämpferanordnung (300) und der Elektromaschine (400) integriert ist.

15. Antriebsstrang für ein Kraftfahrzeug, umfassend eine gewünschtenfalls als Brennkraftmaschine ausgeführte Antriebseinheit, ein Getriebe und ein zwischen der Antriebseinheit und dem Getriebe angeordnetes Antriebssystem (11) nach einem der Ansprüche 1 bis 14.

## Claims

1. Drive system, especially one for incorporation into a drivetrain of a motor vehicle and which is capable of transmitting a motive force between a power unit, possibly an internal combustion engine, and driven wheels, comprising
- a multiple clutch device (12), possibly a dual clutch device (12), and comprising
an electrical machine (400) of the internal rotor type, which is capable of driving a component (34) assigned to the inlet side for rotation about an axis (A) common to the electrical machine (400) and the clutch device (12), and/or is capable of supplying electrical energy on rotation of the component (34) about the axis, the electrical machine comprising a stator arrangement (418) with a stator interaction area (422) and a rotor arrangement (430) with a rotor interaction area (432);
and
- a torsional vibration damper (300), which relative to the reference torque flow direction has a primary side (306, 308; 448, 450, 464; 34, 320; 370; 354) and a secondary side (304; 480; 60; 354; 62), rotatable about an axis (A) common to the torsional vibration damper arrangement and the multiple clutch device in opposition to the action of a damper element arrangement (312), the secondary side being coupled or capable of coupling to the inlet side (34) in the manner of a rotational drive connection,
**characterized in that**
the rotor arrangement is held by means of a carrier element (500') against the primary side of the torsional vibration damper formed by cover plates (306, 308) and the stator arrangement is held by a stator carrier (502') fixed on the transmission side,
the clutch device is embodied as a wet-type multiple clutch device and relative to a reference torque flow direction has an input side (34; 354), possibly assigned to the power unit, and at least two output sides (80, 84), possibly assigned to a transmission of the drivetrain, and can be actuated in order to transmit torque between the input side on the one hand and either of the output sides on the other;
and a bell interior containing the dual clutch (12) being sealed off from the power unit by a wall (503).

2. Drive system according to Claim 1, **characterized in that** the drive system (11) comprises a first sub-system (330; 300; 434, 430) assigned to a power unit and a second sub-system (12) assigned to a transmission, the transmission with the first sub-system arranged thereon and the power unit with the second sub-system arranged thereon being connectable by coupling the two sub-systems together in order to incorporate the drive system into a drivetrain between the power unit and the transmission.

3. Drive system according to Claim 2, **characterized in that** in order to incorporate the drive system (11) into a drivetrain between a power unit and a transmission, the first sub-system (330; 300; 434, 430) can first be fitted to the power unit and the second sub-system (12) can be fitted to the transmission, and that the transmission and the power unit can then be connected together by coupling the two sub-systems.

4. Drive system according to Claim 2 or 3, **characterized in that** the first sub-system comprises a first coupling member (302; 334) and the second sub-system comprises a second coupling member (34), which are each designed with a drive formation, the two drive formations being brought into rotational drive connection with one another by substantially axial relative movement relative to an axis common to the sub-systems in order to couple the two sub-systems when connecting the transmission and the power unit together.

5. Drive system according to Claim 4, **characterized in that** the drive formations are embodied as internal toothing and external toothing (42).

6. Drive system according to any one of Claims 2 to 5, **characterized in that** the first sub-system comprises the torsional vibration damper arrangement (300) and the second sub-system comprises the multiple clutch device (12).

7. Drive system according to any one of Claims 2 to 5, **characterized in that** the first sub-system comprises the electrical machine (400) and the second sub-system comprises the multiple clutch device (12).

8. Drive system according to any one of Claims 2 to 5, **characterized in that** the first sub-system comprises the rotor arrangement and the second sub-system comprises the stator arrangement and the multiple clutch device.

9. Drive system according to either of Claims 7 or 8, **characterized in that** the first sub-system comprises the torsional vibration damper arrangement (300).

10. Drive system according to any one of Claims 2 to 9, **characterized in that** at least one of the sub-systems can be fitted as a pre-assembled unit to the power unit or the transmission.

11. Drive system according to any one of Claims 1 to 10, **characterized in that** the multiple clutch device (12) comprises a first clutch arrangement (64) assigned to a first transmission input shaft (22) of a transmission of the drivetrain and a second clutch arrangement (72) assigned to a second transmission input shaft (24) of the transmission for transmitting torque between the power unit and the transmission, at least one of the transmission input shafts preferably being embodied as a hollow shaft (22, 24) and one (22) of the transmission input shafts running through the other transmission input shaft (24) embodied as a hollow shaft.

12. Drive system according to Claim 11, **characterized in that** clutch arrangements are embodied as multi-plate clutch arrangements (64, 72), of which one radially outer clutch arrangement (64) preferably encloses a radially inner clutch arrangement (72) in an annular manner.

13. Drive system according to any one of Claims 10 to 12, **characterized in that** the multiple clutch device comprises a clutch device hub (34), which serves as input side or is assigned thereto and which comprises a drive formation, possibly an external toothing (42), for coupling the torsional vibration damper arrangement (300) or for coupling an output element (330) of the power unit and/or a coupling element (434) of the electrical machine (400), and/or which comprises a drive formation, possibly an internal toothing, for coupling a transmission-side operating fluid pump, possibly an oil pump, by way of a pump drive shaft (26).

14. Drive system according to any one of Claims 1 to 13, **characterized in that** the drive system comprises at least one component, which is functionally and/or structurally and/or at least in some areas spatially integrated into at least two of the following: the multiple clutch device (12), the torsional vibration damper arrangement (300) and the electrical machine (400).

15. Drivetrain for a motor vehicle, comprising a power unit, which may be embodied as an internal combustion engine, a transmission and a drive system (11) according to any one of Claims 1 to 14 arranged between the power unit and the transmission.

## Revendications

1. Système d'entraînement, notamment à intégrer dans une ligne d'entraînement d'un véhicule automobile, qui peut transmettre une force d'entraînement entre une unité d'entraînement, éventuellement un moteur à combustion interne, et des roues motrices, comprenant :
- un dispositif d'embrayage multiple (12), éventuellement un dispositif d'embrayage double (12),
et comprenant :
- une machine électrique (400) du type à rotor intérieur, par laquelle un élément (34) associé au côté d'entrée peut être entraîné en rotation autour d'un axe (A) commun à la machine électrique (400) et au dispositif d'embrayage (12), et/ou de l'énergie électrique peut être obtenue lors de la rotation de l'élément (34) autour de l'axe, la machine électrique comprenant un ensemble de stator (418) avec une région d'interaction de stator (422) et un ensemble de rotor (430) avec une région d'interaction de rotor (432) ;
et
- un ensemble (300) amortisseur de vibrations de torsion, qui présente, relativement à la direction de flux de couple de référence, un côté primaire (306, 308; 448, 450, 464 ; 34, 320 ; 370 ; 354) et un côté secondaire (304 ; 480 ; 60 ; 354 ; 62) rotatif par rapport au côté primaire, contre l'action d'un ensemble (312) d'éléments amortisseurs, autour d'un axe (A) commun à l'ensemble amortisseur de vibrations de torsion et au dispositif d'embrayage multiple, sachant que le côté secondaire est ou peut être couplé au côté d'entrée (34) au sens d'une liaison d'entraînement en rotation, ou coïncide avec ce dernier,
**caractérisé en ce que**
l'ensemble de rotor est maintenu au moyen d'un élément porteur (500') sur le côté primaire, formé par des tôles de recouvrement (306, 308), de l'amortisseur de vibrations de torsion, et l'ensemble de stator est maintenu par un support de stator (502') fixé côté boîte de vitesses,
le dispositif d'embrayage est réalisé sous forme de dispositif d'embrayage multiple à fonctionnement humide et présente, relativement à une direction de flux de couple de référence, un côté d'entrée (34 ; 354) éventuellement associé à l'unité d'entraînement et au moins deux côtés de sortie (80, 84) éventuellement associés à une boîte de vitesses de la ligne d'entraînement, et il peut être asservi pour transmettre un couple de rotation entre le côté d'entrée d'une part et un côté de sortie sélectionné parmi les côtés de sortie d'autre part ;
et sachant qu'un espace intérieur de cloche contenant l'embrayage double (12) est fermé en direction de l'unité d'entraînement par une paroi (503).

2. Système d'entraînement selon la revendication 1, **caractérisé en ce que** le système d'entraînement (11) présente un premier sous-système (330 ; 300 ; 434, 430) associé à une unité d'entraînement et un deuxième sous-système (12) associé à une boîte de vitesses, sachant qu'afin d'intégrer le système d'entraînement dans une ligne d'entraînement entre l'unité d'entraînement et la boîte de vitesses, la boîte de vitesses avec le premier sous-système disposé sur elle et l'unité d'entraînement avec le deuxième sous-système disposé sur elle peuvent être réunies en accouplant les deux sous-systèmes.

3. Système d'entraînement selon la revendication 2, **caractérisé en ce qu'**afin d'intégrer le système d'entraînement (11) dans une ligne d'entraînement entre une unité d'entraînement et une boîte de vitesses, on peut d'abord monter le premier sous-système (330 ; 300 ; 434, 430) sur l'unité d'entraînement et le deuxième sous-système (12) sur la boîte de vitesses, et la boîte de vitesses et l'unité d'entraînement peuvent être ensuite réunies en accouplant les deux sous-systèmes.

4. Système d'entraînement selon la revendication 2 ou 3, **caractérisé en ce que** le premier sous-système présente un premier organe d'accouplement (302 ; 334) et le deuxième sous-système un deuxième organe d'accouplement (34), qui sont respectivement réalisés avec une formation entraîneuse, ces formations entraîneuses pouvant être amenées en engagement mutuel d'entraînement en rotation par un mouvement relatif essentiellement axial par rapport à un axe commun aux sous-systèmes, afin d'accoupler les deux sous-systèmes lors de la réunion de la boîte de vitesses et de l'unité d'entraînement.

5. Système d'entraînement selon la revendication 4, **caractérisé en ce que** les formations entraîneuses sont réalisées sous la forme d'une denture intérieure et d'une denture extérieure (42).

6. Système d'entraînement selon l'une quelconque des revendications 2 à 5, **caractérisé en ce que** le premier sous-système présente l'ensemble (300) amortisseur de vibrations de torsion et le deuxième sous-système le dispositif d'embrayage multiple (12).

7. Système d'entraînement selon l'une quelconque des revendications 2 à 5, **caractérisé en ce que** le premier sous-système présente la machine électrique (400) et le deuxième sous-système le dispositif d'embrayage multiple (12).

8. Système d'entraînement selon l'une quelconque des revendications 2 à 5, **caractérisé en ce que** le premier sous-système présente l'ensemble de rotor et le deuxième sous-système l'ensemble de stator et le dispositif d'embrayage multiple.

9. Système d'entraînement selon la revendication 7 ou 8, **caractérisé en ce que** le premier sous-système présente l'ensemble (300) amortisseur de vibrations de torsion.

10. Système d'entraînement selon l'une quelconque des revendications 2 à 9, **caractérisé en ce qu'**au moins un des sous-systèmes peut être monté sous la forme d'une unité pré-assemblée sur l'unité d'entraînement ou respectivement la boîte de vitesses.

11. Système d'entraînement selon l'une quelconque des revendications 1 à 10, **caractérisé en ce que** le dispositif d'embrayage multiple (12) présente un premier ensemble d'embrayage (64) associé à un premier arbre d'entrée de boîte (22) d'une boîte de vitesses de la ligne d'entraînement et un deuxième ensemble d'embrayage (72) associé à un deuxième arbre d'entrée de boîte (24) de la boîte de vitesses, pour la transmission de couple entre l'unité d'entraînement et la boîte de vitesses, sachant que, de préférence, parmi les arbres d'entrée de boîte, au moins un est réalisé sous forme d'arbre creux (22, 24), et un (22) des arbres d'entrée de boîte s'étend à travers l'autre arbre d'entrée de boîte (24), réalisé sous forme d'arbre creux.

12. Système d'entraînement selon la revendication 11, **caractérisé en ce que** les ensembles d'embrayage sont réalisés sous la forme d'ensembles d'embrayage (64, 72) à disques multiples, parmi lesquels, de préférence, un ensemble d'embrayage radialement extérieur (64) entoure annulairement un ensemble d'embrayage radialement intérieur (72).

13. Système d'entraînement selon l'une quelconque des revendications 10 à 12, **caractérisé en ce que** le dispositif d'embrayage multiple comprend un moyeu (34) de dispositif d'embrayage servant de côté d'entrée ou associé à ce dernier, moyeu qui présente une formation entraîneuse, éventuellement une denture extérieure (42), pour l'accouplement de l'ensemble (300) amortisseur de vibrations de torsion ou pour l'accouplement d'un élément de sortie (330) de l'unité d'entraînement et/ou d'un élément d'accouplement (434) de la machine électrique (400), et/ou moyeu qui présente une formation entraîneuse, éventuellement une denture intérieure, pour l'accouplement, par l'intermédiaire d'un arbre (26) d'entraînement de pompe, d'une pompe de fluide de service, éventuellement d'une pompe à huile, disposée côté boîte de vitesses.

14. Système d'entraînement selon l'une quelconque des revendications 1 à 13, **caractérisé en ce que** le système d'entraînement présente au moins un élément qui est fonctionnellement et/ou structurellement et/ou au moins pour partie spatialement intégré en au moins deux des éléments suivants : le dispositif d'embrayage multiple (12), l'ensemble (300) amortisseur de vibrations de torsion et la machine électrique (400).

15. Ligne d'entraînement pour un véhicule automobile, comprenant une unité d'entraînement éventuellement réalisée sous forme de moteur à combustion interne, une boîte de vitesses et un système d'entraînement (11) selon l'une quelconque des revendications 1 à 14, disposé entre l'unité d'entraînement et la boîte de vitesses.
